# EUROPEAN PATENT APPLICATION

(11) **EP 4 793 849 A1**
(43) Date of publication of application: **19.08.2026**
(21) Application number: 26155840.7
(22) Date of filing: 02.02.2026
(51) Int. Cl.: G06Q 10/06, G06Q 30/02

(54) **METHOD AND SYSTEM FOR MULTI-AGENT POOL SPEAKER SELECTION**

(30) Priority: 12.02.2025 FR 2501458
(71) Applicant: Accenture Global Solutions Limited, Dublin 4 (IE)
(72) Inventor: THEVENIN, Vincent, 92400 Courbevoie (FR); SALLÉ MORENO, Lucía, 28027 Madrid (ES); NARESSI, Alexandre, 06560 Valbonne (FR)
(74) Representative: Müller-Boré & Partner Patentanwälte PartG mbB

(57) **Abstract**

Method, system, and computer program product are disclosed for a multi-agent pool speaker selection. An input data corresponding to a problem formulation message for a conversation leading to a solution or outcome of a plurality of solutions or outcomes is received. Based on the input data, a plurality of sub-conversations of the conversation is identified. For each sub-conversation, a respective heuristic of a plurality of heuristics is computed. Further, a conversation tree is created based on a description and capabilities of each agent in a pool of agents. Based on the respective heuristic for each sub-conversation and the description and capabilities of each agent in the pool of agents, an agent selection search is performed on the conversation tree to select agents for generating messages of the conversation leading to the solution or outcome. The agents are selected based upon a goal-oriented progression of the conversation.

## Description

### TECHNICAL FIELD

Various examples described herein relate generally to method, system, and computer program product for selecting optimal agents from a multi-agent pool for contributing to, or participating in a conversation.

### BACKGROUND

In the field of Artificial Intelligence (AI), Generative AI (GAI) has recently seen an explosion in popularity. The increasing power and popularity of GAI enables development of multi-agent systems for execution of tasks or operations of enterprises. A multi-agent system includes multiple agents, which are supported by Large Language Models (LLMs) of GAI. The multiple agents are collaboratively operated to interact, coordinate, or compete to execute the tasks or operations. Therefore, the tasks or operations may be executed more efficiently than using a single agent.

### SUMMARY

Implementations of the present disclosure improve a multi-agentic workflow by selecting optimal agents to contribute to or participate in a conversation that leads to an efficient solution or outcome for a problem to be solved. The optimal agents may be selected by leveraging goal-oriented heuristics and optimal dialog or message navigation methods.

In at least one example, the present disclosure provides a computer-implemented method for a multi-agent pool speaker selection. The method includes receiving an input data corresponding to a problem formulation message for a conversation leading to a solution or outcome of a plurality of solutions or outcomes. Based on the input data, the method includes identifying a plurality of sub-conversations of the conversation corresponding to the solution or outcome of the plurality of solutions or outcomes. For each sub-conversation of the plurality of sub-conversations corresponding to the solution or outcome of the plurality of solutions or outcomes, the method includes computing a respective heuristic of a plurality of heuristics. Further, the method includes identifying, based on a description and capabilities of each agent in a pool of agents, a plurality of first agents for a first message of the conversation, wherein the first message is in response to the problem formulation message. Based on the respective heuristic for each sub-conversation of the plurality of sub-conversations, the method includes computing a respective score value for each agent of the first plurality of agents corresponding with each sub-conversation of the plurality of sub-conversations. Based upon the respective score value of each agent of the second plurality of agents, the method includes selecting an agent of the first plurality of agents as a first agent for contributing to or participating in the first message of the conversation. Based at least in part upon the contribution or participation of the first agent to or in the first message of the conversation and the description and capabilities of each agent in the pool of agents, the method includes identifying a second plurality of agents for a second message of the conversation. Based on the respective heuristic for each sub-conversation of the plurality of sub-conversations, the method includes computing a respective score value for each agent of the second plurality of agents corresponding with each sub-conversation of the plurality of sub-conversations. Based upon the respective score value of each agent of the second plurality of agents, the method includes selecting an agent of the second plurality of agents as a second agent for contributing to or participating in the second message of the conversation. The agent of the first plurality of agents and the agent of the second plurality of agents are selected based upon a goal-oriented progression of the conversation leading to the solution or outcome of the plurality of solutions or outcomes.

The present disclosure further describes a system for implementing the method provided herein. The present disclosure also describes a non-transitory computer-readable storage media (CRM) having instructions stored thereon which, when executed by one or more processors of a computing device, cause the computing device to perform operations in accordance with the method described herein.

It is appreciated that method in accordance with the present disclosure can include any combination of the aspects and features described herein. That is, the method in accordance with the present disclosure is not limited to the combinations of aspects and features specifically described herein, but also include any combination of the aspects and features provided.

The details of one or more implementations of the present disclosure are set forth in the accompanying drawings and the description below. Other features and advantages of the present disclosure will be apparent from the description and drawings, and from the claims.

### BRIEF DESCRIPTION OF THE DRAWINGS

Various examples in accordance with the present disclosure will be described with reference to the drawings, in which:
FIG. 1 depicts an example environment used to execute implementations of the present disclosure.
FIG. 2 depicts an example conceptual architecture of an initialization manager of a multi-agent system disclosed in the example environment of FIG. 1, for performing an initialization phase, in accordance with implementations of the present disclosure.
FIG. 3 depicts an example list created during the initialization phase, in accordance with implementations of the present disclosure.
FIG. 4 depicts an example conceptual architecture of a solution generator of the multi-agent system disclosed in the example environment of FIG. 1, for generating a solution or outcome by selecting optimal agents for the conversation, in accordance with implementations of the present disclosure.
FIGS. 5A-5E depict an example illustration of generating an optimal solution for a problem through a conversation, in accordance with implementations of the present disclosure.
FIG. 5F depicts an example illustration of backtracking process in the conversation, in accordance with implementations of the present disclosure.
FIG. 6 depicts an example process flow of generating the optimal solution for the problem, in accordance with implementations of the present disclosure.
FIG. 7 depicts an example illustration of generating the optimal solution for the problem, in accordance with implementations of the present disclosure.
FIG. 8 depicts an example process flow of generating the optimal solution for the problem from a 'top K' number of solutions, in accordance with implementations of the present disclosure.
FIG. 9 depicts an example process flow of generating the optimal solution for the problem from a 'N' number of solutions, in accordance with implementations of the present disclosure.
FIG. 10A depicts an example illustration of generating the 'N' number of solutions, in accordance with implementations of the present disclosure.
FIG. 10B depicts an example illustration of selecting the optimal solution from the 'N' number of solutions, in accordance with implementations of the present disclosure.
FIG. 11 depicts an example illustration of generating both the 'top K' number of solutions and the 'N' number of solutions for selecting the optimal solution for the problem, in accordance with implementations of the present disclosure.
FIG. 12 is a flow diagram that presents an example computer implemented method for a multi-agent pool speaker selection, in accordance with implementations of the present disclosure.
FIG. 13 depicts an example computer system to implement the multi-agent system disclosed in the example environment of FIG. 1, in accordance with implementations of the present disclosure.

Like reference numbers and designations in the various drawings indicate like elements.

### DETAILED DESCRIPTION

In the following description, various examples will be illustrated by way of example and not by way of limitation in the figures of the accompanying drawings. References to various examples in this disclosure are not necessarily to the same example, and such references mean at least one. While specific implementations and other details are discussed, it is to be understood that this is done for illustrative purposes only. A person skilled in the relevant art will recognize that other components and configurations may be used without departing from the scope and spirit of the claimed subject matter.

Reference to any "example" herein (e.g., "for example," "an example of," by way of example," or the like) are to be considered non-limiting examples regardless of whether expressly stated or not.

The terms used in this specification generally have their ordinary meanings in the art, within the context of the disclosure, and in the specific context where each term is used. Alternative language and synonyms may be used for any one or more of the terms discussed herein, and no special significance should be placed upon whether or not a term is elaborated or discussed herein. Synonyms for certain terms are provided. A recital of one or more synonyms does not exclude the use of other synonyms. The use of examples anywhere in this specification including examples of any terms discussed herein is illustrative only and is not intended to further limit the scope and meaning of the disclosure or of any exemplified term. Likewise, the disclosure is not limited to various examples given in this specification.

Without intent to limit the scope of the disclosure, examples of instruments, apparatus, methods, and their related results according to the examples of the present disclosure are given below. Note that titles or subtitles may be used in the examples for convenience of a reader, which in no way should limit the scope of the disclosure. Unless otherwise defined, technical and scientific terms used herein have the meaning as commonly understood by one of ordinary skill in the art to which this disclosure pertains. In the case of conflict, the present document, including definitions will control.

The term "comprising" when utilized means "including, but not necessarily limited to"; it specifically indicates open-ended inclusion or membership in the so-described combination, group, series, and the like.

The term "a" means "one or more" unless the context clearly indicates a single element.

"First," "second," etc., are labels to distinguish components or blocks of otherwise similar names but does not imply any sequence or numerical limitation.

"And/or" for two possibilities means either or both of the stated possibilities ("A and/or B" covers A alone, B alone, or both A and B take together), and when present with three or more stated possibilities means any individual possibility alone, all possibilities taken together, or some combination of possibilities that is less than all of the possibilities. The language in the format "at least one of A . . . and N" where A through N are possibilities means "and/or" for the stated possibilities (e.g., at least one A, at least one N, at least one A and at least one N, etc.).

It should also be noted that in some alternative implementations, the functions/acts noted may occur out of the order noted in the figures. For example, two steps disclosed or shown in succession may in fact be executed substantially concurrently or may sometimes be executed in the reverse order, depending upon the functionality or acts involved.

Specific details are provided in the following description to provide a thorough understanding of examples. However, it will be understood by one of ordinary skill in the art that examples may be practiced without these specific details. For example, systems may be shown in block diagrams so as not to obscure the examples in unnecessary detail. In other instances, well-known processes, structures, and techniques may be shown without unnecessary detail in order to avoid obscuring example examples.

The specification and drawings are to be regarded in an illustrative rather than a restrictive sense. It will, however, be evident that various modifications and changes may be made thereunto without departing from the broader spirit and scope as set forth in the claims.

With the advent of Generative Artificial Intelligence (GAI), enterprises are adopting GAI to support execution of various tasks or operations. For example, GAI may support communications or conversations, and processes in software systems to support decision-making within the enterprises. Multiple applications within an enterprise network environment may use and interact with foundation models or Large Language Models (LLMs) of GAI to provide input and/or data for execution of the tasks such as human computer interactions (e.g., question and answering), automating process execution, process planning, generating step-by-step procedures for the process execution, performing data analysis, and/or the like. Therefore, the LLMs have capability of performing Natural Language Processing (NLP) related tasks and processing unstructured data. Due to the LLM's capability of processing the unstructured data, the LLMs may be proliferated and integrated into multi-agent systems.

A multi-agent system may use agents to execute the tasks related to various domains and applications such as software engineering, computational biology, healthcare or medicine, and/or the like. The agents may access LLMs for executing the tasks related to the various domains and applications. Therefore, the multi-agent system may improve factuality and reasoning of the agents by using several instances of the LLMs (instead of using a single instance) for each agent and assigning configurations for each agent to handle specific roles. For example, each agent may send and receive messages from and to other agents, maintain context, and execute intended tasks or sub-tasks based on their respective configurations.

The multi-agent system may dynamically enable the agents to interact or cooperate, reason, and validate each other's output to generate a solution for a task by solving complex problems or objectives associated with the task. In existing approaches, the multi-agent system may generate multiple solutions, score, and rank each of the multiple solutions, and select a solution with the highest rank among the multiple solutions as the solution for the task. However, scoring and ranking each of the multiple solutions may involve manual effort, which may be time consuming and inefficient.

Further, the multi-agent system may enable the agents to interact, reason, and validate each other's output through structured conversations to generate the solution. For example, consider that the multi-agent system may receive a task that indicates a problem to solved. In such a scenario, the multi-agent system may define a conversation for the problem. Upon defining the conversation, the multi-agent system may enable the agents to contribute or participate in the conversation. Contributing or participating of the agents in the conversation may involve communication and exchange of information by the agents in a dialogue-based manner, which may lead to generation of the solution for the task.

With the increase in number of agents participating in the conversation (e.g., three or more agents being participating in the conversation), the multi-agent system may select an agent from the agents, to contribute or participate at any given point in the conversation (e.g., selecting the agent to speak at any given point in the conversation). The multi-agent system may select the agent in accordance with a centralized approach or a decentralized approach. With the centralized approach, the multi-agent system may select an agent from the agents as a manager agent. The manager agent may further select the agent to contribute or participate at any given point in the conversation. With the decentralized approach, the multi-agent system may enable the agents to interact and collaborate with each other to select the agent to contribute or participate at any given point in the conversation. Therefore, the agents may operate independently, making decisions, and performing the tasks without any centralized control.

Irrespective of the centralized approach and the decentralized approach, the multi-agent system may use one of various existing agent selection methods to select the agent to contribute or participate at any given point in the conversation. The existing agent selection methods may include a round-robin based agent selection method, a fixed order agent selection method, an arbitrary agent selection method, an input-based agent selection method, Decentralized Partially Observable Markov Decision Process (Dec-POMPD) based agent selection method, a Multi-Agent Path Finding (MAPF) and Multi-Agent Pickup and Delivery (MAPD) with A* based agent selection method, a Tree of Thoughts (ToT) based agent selection method, a Dynamic LLM-Agent Network (DyLAN) based agent selection method, an LLM based selection method, and/or the like.

The round-robin based agent selection method may enable all the agents to equally contribute or participate in the conversation in an ordered manner. The fixed order agent selection method may involve selecting the agent based on a fixed or static order. For example, an agent B may always be selected after an agent C and the agent C may always be selected after an agent D or an agent E. The arbitrary agent selection method may involve selecting the agent based on a flow of the conversation. The input-based agent selection method may involve manual efforts, for example, use feedback or an input received from a user, to select the agent. The Dec-POMPD based agent selection method may involve selecting the agent based on contribution of each of the agents to the conversation. The contribution of each of the agents may be determined by performing credit assignment based on Reinforcement Learning (RL). The MAPF and MAPD with A* based agent selection method may involve selecting an optimal path for the agents by considering nodes on a map as locations where the agents navigate. The ToT based agent selection method may involve selecting a single agent from the agents for the entire conversation, by using heuristics for a Breadth-First Search (BFS) or a Depth-First Search (DFS). The DyLAN based agent selection method may select the agent, based on past performance of each of the agents and by imposing pruning of faulty agents as a proxy solution for selecting the agent. The LLM based agent selection method may leverage an LLM to access the conversation and select the agent. For example, the LLM may be used to determine a dialogue from the conversation and description of available agents. Based on the determined dialogue and description of available agents, the LLM may be used to select the agent for a next message or dialogue or determine to terminate the conversation.

However, the above-described existing agent selection methods may often fail to allow spontaneous interaction between the agents and utilize autonomy and/or automation capabilities of the agents. Further, some of the above-described existing agent selection methods (e.g., the arbitrary agent selection method) may provide more importance or privileges or priority to only certain agents, without selecting other agents for the conversation. Further, utilization of the fixed or static order of agents by some of the above-described existing agent selection methods may have groundless influence on selection of the agent, as the fixed or static order of agents may predefine an agent selection workflow that may be more rigid and unchangeable once the conversation starts and may require a problem-specific knowledge for selecting the agent. Further, some of the above-described existing agent selection methods may formulate the conversation as a dialogue tree, where branches or edges are determined and expanded based on the agent selected to contribute to, or participate in a next message. Expansion of a single branch may be dependent on a branching factor and may involve an LLM for computing the next message. The branching factor may be equal to a number of agents participating in the conversation, depending on an application. Due to the branching factor, the multi-agent system may be required to perform a large limiting width-wise search for expanding a branch, which makes expansion of the branches time consuming and expensive. In addition, some of the above-described existing agent selection methods may often create infinite iteration loops while causing repetitive interactions between only two agents or completely ignoring several agents if the agents had rarely contributed or participated at the start of the conversation, as illustrated in an example table 1.

**Table 1: An example conversation stuck in a loop between only two agents (e.g., agent 1 and agent 2), resulting the conversation repetitive and highly focused on a single topic.**

| Agent | Message in the Conversation |
|---|---|
| Agent 1 | Message 1 |
| Agent 2 | Message 2 |
| Agent 1 | Message 3 |
| Agent 2 | Message 4 |
| Agent 1 | Message 5 |

With the above-described limitations, the existing agent selection methods may fail to facilitate dynamic selection of the agents for the conversation and may derail the conversation, thereby resulting in an inappropriate selection of the agent to contribute or participate at any given point in the conversation. The inappropriate selection of the agent may be sub-optimal and may result in generation of an inefficient solution for the task. Therefore, by employing the existing agent selection methods, the multi-agent system may expend a significant amount of time, human resources, and computing resources (e.g., processing resources, memory resources, communication resources, and/or the like) for generating the solution for the task or problem.

Implementations of the present disclosure enable selection of an optimal agent to contribute or participate at any given point in the conversation, by providing flexibility in selection of the agent during the conversation itself and allowing optimal backtracking and exploration of alternative selection of the agent from any point in the conversation. Selection of the optimal agent may involve selecting the agent based on numerical evaluation or heuristics of the conversation.

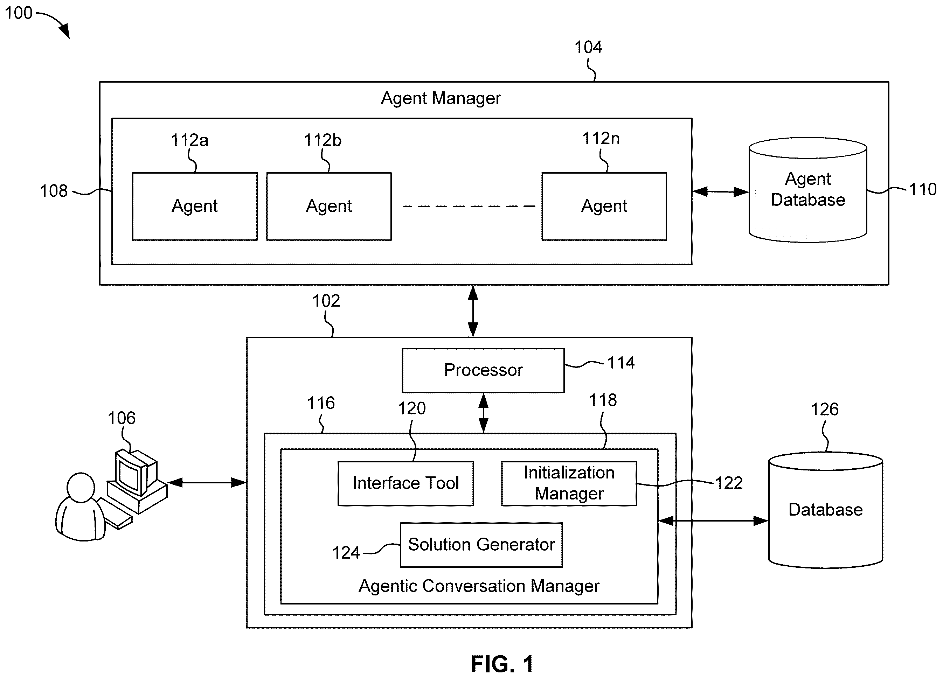

FIG. 1 depicts an example environment 100 used to execute implementations of the present disclosure. The example environment 100 may enable generation of optimal solutions or outcomes for tasks. The tasks may be related to various domains and applications such as software development, creation of campaigns, creative thinking, ideation, computational biology, healthcare or medicine, customer care-based applications, and/or the like. In some examples, the tasks may include complex problems. In the present disclosure, the terms "tasks" and "problems" may be used interchangeably.

The example environment 100, depicted in FIG. 1, includes a multi-agent system 102, an agent manager 104, and a user device 106. In the present disclosure, the multi-agent system 102 may also be referenced as a system, an agentic system, a computing device, and/or the like. The multi-agent system 102 may communicate with the agent manager 104 and the user device 106 using a network (not shown in FIG. 1). In some examples, the network may include a Local Area Network (LAN), a Wide Area Network (WAN), the Internet, or a combination thereof. In some examples, the network may be accessed over a wired and/or a wireless communication link.

The agent manager 104 includes a multi-agent pool 108 and an agent database 110. The multi-agent pool 108 (also be referenced as a pool of agents) includes agents 112a-112n.

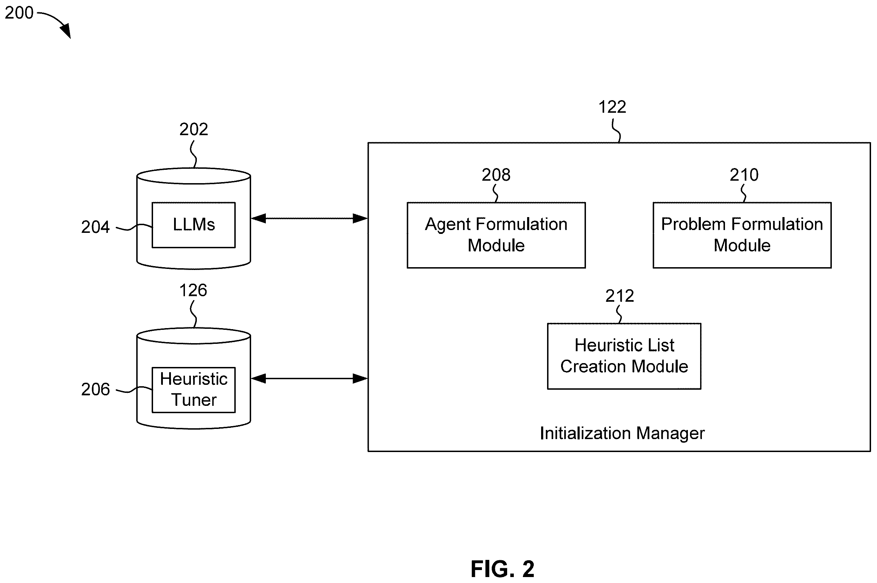

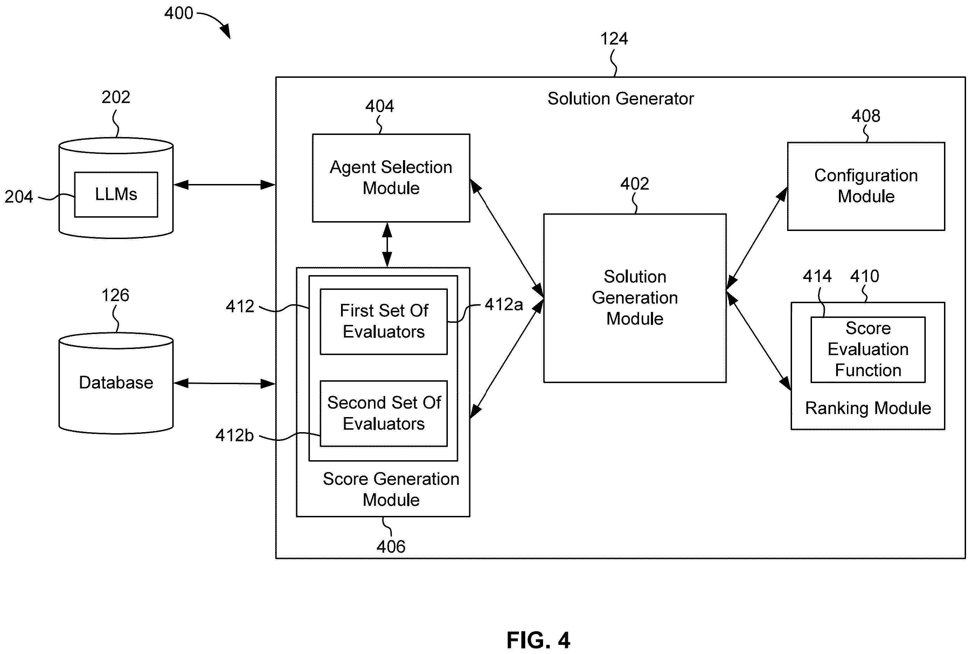

In some examples, the agents 112a-112n may include Large Language Model (LLM) based agents. By way of non-limiting example, each of the LLM based agents may access an LLM of LLMs 204 from a model database 202 (depicted in FIGS. 2 and 4) and may have a memory (not shown in FIG. 1), and unique prompt and roles. In the present disclosure, the LLM may also be referenced as a foundation model, a Generative Artificial Intelligence (GAI) model, and/or the like. The LLM may be a general-purpose GAI model like a large deep learning neural network, which may be trained using a broad range of generalized and unlabeled training data to perform the one or more tasks such as human computer interactions (e.g., question and answering), automating process execution, process planning, generating step-by-step procedures for the process execution, performing data analysis, processing media (e.g., an image, a video, audio, and/or the like), developing a code, testing the code, and/or the like. Therefore, the LLM may include a web search tool, a code generator, a code complier, a script generator, an image generator, a vision model, and/or the like. While implementations of the present disclosure are described in further detail herein with non-limiting reference to the LLM, it is contemplated that implementations of the present disclosure may be realized using any appropriate foundation models, Machine Learning (ML) models, Artificial Intelligence (AI) models, and/or the like. The memory of an agent may store interactions or information exchanged by the respective agent with other agents. The roles of agent may indicate functions, which are being performed by the respective agent. In an example, the agent may have a role to browse a website for generating an answer for a question. In another example, the agent may have a role to develop a code. In yet another example, the agent may have a role to create a chart by executing a code using data received from the user device 106. Additionally, or alternatively, each of the agents 112a-112n may have tools and configurations to collaborate with other agents.

In some other examples, the agents 112a-112n may include a combination of the LLM based agents and non-LLM based agents. By way of non-limiting example, the non-LLM based agents may include a web search Application Programming Interfaces (APIs), image generation tools, graphic design tools, and/or the like.

In some implementations, the agent manager 104 may create the multi-agent pool 108 for a specific problem. Creating the multi-agent pool 108 may include creating and training the agents 112a-112n to solve the specific problem. For example, consider that the specific problem includes creating a marketing campaign. In such a scenario, the multi-agent pool 108 may create five agents from the agents 112a-112n for creating the marketing campaign. The five agents may act as a marketing agent, a search agent, a sustainability agent, a design agent, and influencer agent, respectively. For another example, consider that the specific problem includes travel planning. In such a scenario, the multi-agent pool 108 may create four agents from the agents 112a-112n for the travel planning. The four agents may include a flight agent to book flights, a hotel agent to search hotels, a transportation agent to arrange transportation for a travel, and an activity agent to book activities, events, respectively.

The agent database 110 may store a name, a description, and capabilities of each of the agents 112a-112n. The name may be assigned by the agent manager 104 to each of the agents 112a-112n based on the functions or roles being performed by the respective agent. The description (e.g., in a textual format) and capabilities of each of the agents 112a-112n may indicate the functions or roles being performed by the agent and functional values or performance of the agents 112a-112n. Examples of the functional values or performance of the agents 112a-112n may include an availability, cost, latency, accuracy, size, response generation time (e.g., time taken by a respective agent to complete a generation of a response or outcome), and/or the like of the respective agents 112a-112n.

The user device 106 may be associated with a user, a client, an administrator, and an entity (e.g., an enterprise, an organization, and/or the like). In some examples, the user device 106 may include a desktop, smartphones, laptops, a tablet, and/or the like. The user device 106 may present one or more user interfaces (e.g., Graphical User Interfaces (GUIs)) of a workspace for the user to interact with the multi-agent system 102. The user device 106 may be used to provide input and/or receive output to/from the multi-agent system 102. The input may include an input data describing a problem to be solved. The output may include a solution or outcome generated for the problem.

The multi-agent system 102 may be implemented as an on-premises system that is operated by an enterprise or a third-party engaged in cross-platform interactions and data management. In some examples, the multi-agent system 102 may be implemented as an off-premises system (for example, cloud or on-demand) that is operated by an enterprise or a third-party on behalf of an enterprise. In some examples, the multi-agent system 102 may be implemented in a cloud environment. For simplicity, the multi-agent system 102 depicted in FIG. 1 may be a cloud based multi-agent system that is intended to represent various forms of servers including a web server, an application server, a proxy server, a network server, a server pool, and/or the like.

In some examples, the multi-agent system 102 may be implemented by way of a single device or a combination of multiple devices that may be operatively connected or networked together. The multi-agent system 102 may be implemented in hardware or a suitable combination of hardware and software. The "hardware" may include a combination of discrete components, an integrated circuit, an application-specific integrated circuit, a field-programmable gate array, a digital signal processor, or other suitable hardware. The "software" may include one or more objects, agents, threads, lines of code, subroutines, separate software applications, or other suitable software structures operating in one or more software applications.

Still referring to FIG. 1, the multi-agent system 102 includes a processor 114 and a memory 116 communicably coupled to the processor 114. The processor 114 may include one or more processors. Examples of the processor 114 may include, but are not limited to, microprocessors, microcomputers, microcontrollers, digital signal processors, central processing units, state machines, logic circuits, and/or any devices that manipulate data or signals based on operational instructions. Among other capabilities, the processor 114 may fetch instructions (also be referenced to as processor-executable instructions or machine-executable instructions) from the memory 116 and execute the fetched instructions for performing operations according to the present disclosure. The memory 116 may be non-volatile or non-transitory computer-readable medium (CRM) such as, a magnetic disk or solid-state non-volatile memory or volatile medium such as Random Access Memory (RAM), and/or the like. Further, the multi-agent system 102 includes an agentic conversation manager 118. The agentic conversation manager 118 may be stored in the memory 116 and provided as a downloadable library including the instructions. The agentic conversation manager 118 includes an interface tool 120, an initialization manager 122, and a solution generator 124. In some examples, as depicted in FIG. 1, the agentic conversation manager 118 may be further communicatively coupled with a database 126, which may store various data and intermediate results generated by the interface tool 120, the initialization manager 122, and the solution generator 124.

In an example implementation, the processor 114 may execute the interface tool 120 to receive the input data. In some examples, the input data may be received from the user device 106. In some other examples, the input data may be received from an LLM application (not shown in FIG. 1). The input data may include a problem formulation message (e.g., an initial message) for a conversation. The problem formulation message may describe the problem to be solved. By way of non-limiting example, the problem may indicate creating a campaign, generating a travel plan, developing a software code, generating a health report, generating assistance related to products and/or services, and/or the like. In some examples, the conversation may include a text-based conversation, or a multimodal conversation (e.g., including one or more of: text, an image, a video, audio, and/or the like), or a combination thereof.

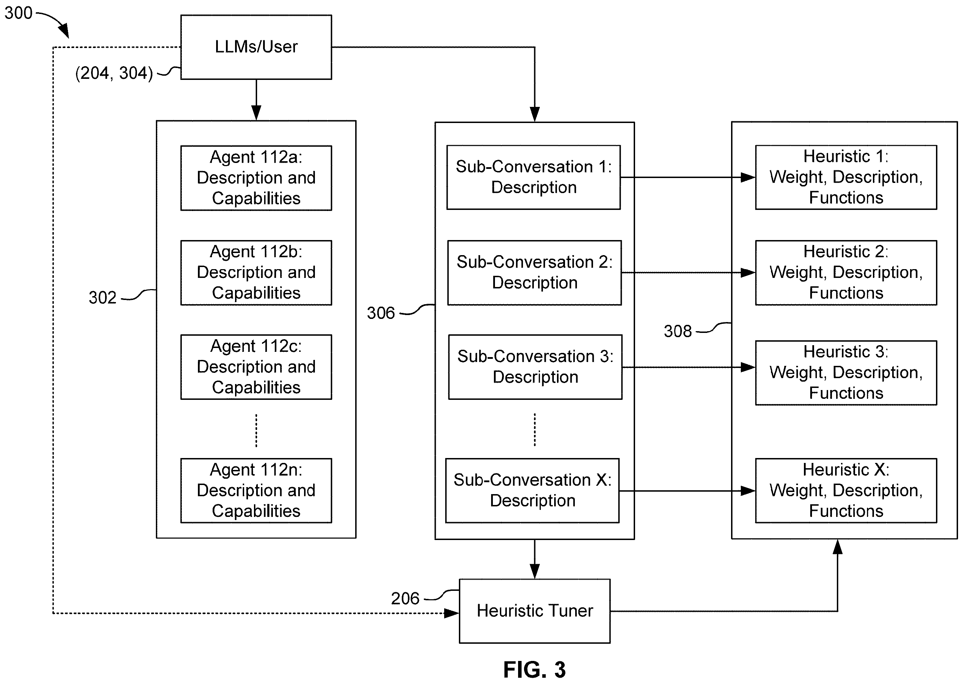

In an example implementation, the processor 114 may execute the initialization manager 122 to identify sub-conversations of the conversation and determine a respective heuristic to be measured or computed for each of the identified sub-conversations. The sub-conversations of the conversation may correspond to sub-problems of the problem. In some examples, the respective heuristic for each of the sub-conversations may be computed based upon a respective weight, a description, and/or an evaluation function associated with a respective sub-conversation. Identifying the sub-conversations and determining the respective heuristic to be measured or computed for each of the identified sub-conversations are described in detail in conjunction with FIGS. 2 and 3.

In an example implementation, the processor 114 may execute the solution generator 124 to generate a solution or outcome for the problem by performing a multi-agent pool speaker selection. The multi-agent pool speaker selection may involve selecting and enabling the agents from the multi-agent pool 108, as speakers for contributing to or participating in (e.g., for speaking in) the conversation that leads to the solution or outcome for the problem. The agents may be selected for contributing to or participating in the conversation by generating an optimal dialog path for the conversation based on the description and capabilities of each agent in the multi-agent pool 108 (accessed from the agent database 110), the heuristic determined for each of the sub-conversations, and a goal-oriented progression of the conversation. Contribution or participation of the selected agents to or in the conversation may involve communication and exchange of information or messages by the agents in a dialogue-based manner, which may lead to generation of the solution or outcome for the problem. The solution or outcome generated for the problem may be an optimal solution or outcome for the problem, as the agents have been dynamically or flexibly selected based on generation of the optimal dialog path during the conversation itself. Generation of the solution or outcome by the selection of the agents for contributing to or participating in the conversation is described in detail in conjunction with FIG. 4.

In another example implementation, the processor 114 may execute the solution generator 124 to generate a 'top K' number of solutions or outcomes for the problem and select a best solution or outcome (e.g., an optimal solution or outcome) among the 'top K' number of solutions for the problem. The 'top K' number of solutions or outcomes may be generated by iterating the conversation for a 'K' number of iterations or times using different variation parameters. The variation parameters are described in detail in FIG. 4.

In yet another example implementation, the processor 114 may execute the solution generator 124 to generate a 'N' number of solutions or outcomes for the problem and select a best solution or outcome (e.g., an optimal solution or outcome) among the 'N' number of solutions or outcomes for the problem, which is described in detail in FIG. 4.

Various examples depicting generation of the solution or outcome for the problem by selecting the optimal agents for the conversation corresponding to the solution or outcome is described in detail in conjunction with FIGS. 2-13.

FIG. 2 depicts an example conceptual architecture 200 of the initialization manager 122 of the multi-agent system 102 disclosed in the example environment of FIG. 1, for performing an initialization phase, in accordance with implementations of the present disclosure. The initialization manager 122, depicted in FIG. 2, may be communicatively coupled to the model database 202 and the database 126. The model database 202 may include the LLMs 204. The database 126 may include a heuristic tuner 206. The heuristic tuner 206 may be a heuristic function used for computing the respective heuristic for each of the sub-conversations, which is described in detail below.

The initialization manager 122 may perform the initialization phase to create a conversation tree and a heuristic list. For performing the initialization phase, the initialization manager 122 includes an agent formulation module 208, a problem formulation module 210, and a heuristic list creation module 212, as depicted in FIG. 2.

The agent formulation module 208 may identify or define the agents 112a-112n (depicted in FIG. 1) for the conversation from the multi-agent pool 108 (depicted in FIG. 1). For identifying or defining the agents 112a-112n for the conversation, the agent formulation module 208 may extract the description and capabilities of the agents 112a-112n from the agent database 110 (depicted in FIG. 1), based on the input data received by the interface tool 120 (depicted in FIG. 1). The input data may indicate a problem formulation message (also be referenced as an initial message) for the conversation. The problem formulation message may indicate the problem to be solved. Based on the description and capabilities of the agents 112a-112n, the agent formulation module 208 may identify or define the agents 112a-112n for the conversation. In some examples, the agent formulation module 208 may use an LLM from the LLMs 204 of the model database 202 for identifying or defining the agents 112a-112n for the conversation. The agent formulation module 208 may provide the extracted description and capabilities of the agents 112a-112n to the LLM and receive the agents 112a-112n identified for the conversation from the LLM. In some other examples, the agent formulation module 208 may receive an agent input from the user through the user device 106 and use the received agent input for identifying the agents 112a-112n for the conversation. The agent input may indicate the agents 112a-112n selected by the user for the conversation.

Upon identifying the agents 112a-112n for the conversation, the agent formulation module 208 may create the conversation tree (also be referenced to as a tree, a conversation tree paradigm, a dialog tree, a conversation tree of agents, and/or the like). In some examples, the conversation tree may be created using a regular search tree method, which is known and not further described herein. The conversation tree may include nodes corresponding to the agents 112a-112n with a predefined maximal depth. Therefore, a node in the conversation tree may constitute a specific agent's selection and response. The node corresponding to an agent may further have multiple child nodes or leaf nodes (also be referenced to as leaves) corresponding to other agents. The child nodes or leaf nodes may include messages or responses received from any distinct agents. Therefore, the agents 112a-112n themselves constitute a search space of the conversation tree. The agent formulation module 208 may store the conversation tree in the database 126.

The problem formulation module 210 may identify the sub-conversations of the conversation and generate a description for each of the sub-conversations. The sub-conversations may correspond to sub-problems of the problem. In some examples, the problem formulation module 210 may use an LLM of the LLMs 204 from the model database 202 to identify the sub-conversations of the conversation and generate a description for each of the sub-conversations. In some other examples, the problem formulation module 210 may receive a problem input from the user through the user device 106 and use the problem input for identifying the sub-conversations of the conversation. The problem input may indicate the sub-conversations selected by the user. By way of non-limiting example, for the conversation corresponding to a problem of creating a campaign, the problem formulation module 210 may identify the sub-conversations as creativity, truthfulness, and problem completion. However, as would be understood, the sub-conversations may include many more sub-problems. The problem formulation module 210 may store the sub-conversations of the conversations in the database 126.

The heuristic list creation module 212 may create a heuristic list for the sub-conversations. The heuristic list may determine a respective heuristic to be measured or computed for each of the sub-conversations and a relativity between the heuristic and a respective sub-conversation. In some examples, the heuristic may include creativity, pertinence, relevance, staleness, a number of facts, a number of statistics, participation, and/or disagreement assigned to the respective weight. By way of non-limiting example, the heuristic like creativity may be determined to be measured or computed for a sub-conversation 1 and the heuristic like pertinence may be determined to be measured or computed for a sub-conversation 2. The relativity may indicate how the heuristic and the respective sub-conversation are relative to each other.

In addition, the heuristic list may define a weight, a description, and/or evaluation functions for each of the sub-conversations. The weight, the description, and/or the evaluation functions defined for each of the sub-conversations may be used to measure or compute the respective heuristic. The weight may be determined by identifying how important a respective sub-conversation is to the conversation. For example, weights of the sub-conversations such as the creativity, the truthfulness, and the problem completion may be initialized as 0.5, 0.2, and 0.3, respectively. The description may be in a textual format describing the respective heuristic. The evaluation functions may indicate LLM based functions or non-LLM based functions for computing the heuristic. The LLM based functions and the non-LLM based functions are described in detail in conjunction with FIG. 4 with one or more examples.

In some examples, the heuristic list creation module 212 may use the heuristic tuner 206 for creating the heuristic list for the sub-conversations, based on the sub-conversations of the conversation and/or the description and capabilities of the agents 112a-112n. The heuristic tuner 206 may be used to create the heuristic list for the sub-conversations, by determining an importance of each of the sub-conversations to the conversation. In some other examples, the heuristic list creation module 212 may use an LLM of the LLMs 204 from the model database 202 to create the heuristic list, based on the sub-conversations of the conversation and/or the description and capabilities of the agents 112a-112n. In some other examples, the heuristic list creation module 212 may receive a heuristic input from the user through the user device 106 and use the heuristic input for creating the heuristic list for each of the sub-conversations. The heuristic input may indicate the heuristic, the weight, and the evaluation functions selected by the user for each of the sub-conversations. In some other examples, the heuristic list creation module 212 may create the heuristic list based on a predefined library of heuristics. Additionally, or alternatively, the heuristic list creation module 212 may use the heuristic tuner 206 to tune the weight of the heuristic determined based on one of the LLMs 204 or the heuristic input or the predefined library of heuristics. The heuristic list creation module 212 may store the created heuristic list for the sub-conversations in the database 126.

An example list 300 including an agent list 302, a sub-conversation list 306, and a heuristic list 308 created during the initialization phase is illustrated in FIG. 3. The agent list 302 may indicate the agents 112a-112n identified for the conversation using one of the LLMs 204 or the agent input received from a user 304 and may also indicate the description and capabilities of each of the agents 112a-112n. The sub-conversation list 306 may indicate sub-conversations 1-X identified for the conversation using one of the LLMs 204 or the problem input received from the user 304 and may also indicate a description of each of the sub-conversations 1-X. The heuristic list 308 may indicate heuristics 1-X created for the sub-conversations 1-X, respectively using the heuristic tuner 206 and weights, a description, and evaluation functions (depicted as functions in FIG. 3) associated with each of the heuristics 1-X.

FIG. 4 depicts an example conceptual architecture 400 of the solution generator 124 of the multi-agent system 102 disclosed in the example environment of FIG. 1, for generating the solution or outcome by selecting the optimal agents for the conversation, in accordance with implementations of the present disclosure. As depicted in FIG. 4, the solution generator 124 may be communicatively coupled with the model database 202 including the LLMs 204 and the database 126. The solution generator 124 includes a solution generation module 402, an agent selection module 404, a score generation module 406, a configuration module 408, and a ranking module 410.

In an example implementation, the solution generation module 402 may receive the problem formulation message (e.g., the initial message) for the conversation describing a problem to be solved and may generate a solution or outcome for the problem. The solution generation module 402 may facilitate the conversation based on selection of an agent from the multi-agent pool 108 (depicted in FIG. 1) for contributing to or participating in each respective point of the conversation. Facilitating the conversation may lead to generation of the solution or outcome for the problem. The solution generation module 402 may enable the agent selection module 404 to operate in conjunction with the score generation module 406 for selecting the agents from the multi-agent pool 108 (e.g., the pool of agents) for contributing to or participating in the conversation.

The agent selection module 404 may select the agents from the multi-agent pool 108 for contributing to or participating in the conversation with a generation of an optimal dialog path (also be referenced to as optimal dialogs or optimal messages) for the conversation. It should be noted that generation of the optimal dialog path for the conversation may constitute selection and enabling of the agents to contribute to or participating in the conversation. The optimal dialog path may indicate a path from the problem formulation message to a final message of the conversation with the lowest cost or the highest summation of score values (hereinafter referenced as highest score value), which are described in detail below.

The agent selection module 404 may generate the optimal dialog path for the conversation by performing an agent selection search (also be referenced as a tree search) on the conversation tree using the heuristic list created for the sub-conversations of the conversation. The agent selection search may include any training free tree search. By way of non-limiting example, the agent selection search may include an A* search. The conversation tree may be created and stored in the database 126 by the initialization manager 122 based on the agents 112a-112n available from the multi-agent pool 108 for the conversation (described in detail in conjunction with FIG. 2). The conversation tree may include nodes representing the agents 112a-112n available for the conversation. Therefore, the terms "nodes" and "agents" may be used interchangeably throughout the document. The heuristic list may indicate a heuristic to be measured or computed for each of the sub-conversations. The heuristic list may also indicate a weight, a description, and evaluation functions defined for each of the sub-conversations to measure or compute the respective heuristic. In an implementation, the agent selection search may allow to expand the conversation tree in a depth-first manner, until some obstacle in the conversation is met. The obstacle may indicate finding child nodes or leaf nodes, which may not be the deepest node (e.g., with the lowest score values). If the obstacle in the conversation is met, the agent selection search may automatically enable backtracking of the conversation to a next optimal node in the conversation and continue from such an optimal node to select the optimal agent with respect to the goal node at each node.

To illustrate in detail, for determining the optimal dialog path for the conversation, the agent selection module 404 may initialize the conversation tree with a root node being a start node. The root node or start node may correspond to the problem formulation message. In some examples, the conversation tree may be initialized with the root node or start node based on an initialization message received from the user and/or using an LLM from the LLMs 204 of the model database 202. The initialization message may indicate to initialize the conversation tree with the root node or start node corresponding to the problem formulation message. It should be noted that the start node or root node may not be associated with any of the agents from the multi-agent pool 108. In the present disclosure, the terms "problem formulation message", "start node", and "root node" may be used interchangeably.

Upon initializing the conversation tree with the start node, the agent selection module 404 may identify all nodes that have an incoming edge from the start node as child nodes or leaf nodes in the conversation tree. The child nodes or leaf nodes may be identified for a first message of the conversation. The first message may be initiated or provided in response to the problem formulation message. The child nodes or leaf nodes may correspond to any of the agents 112a-112n, for example, first agents, in the multi-agent pool 108 identified for the first message of the conversation. The first agents corresponding to the child nodes or leaf nodes may be identified based on the description and capabilities of each agent of the first agents. Upon identifying the child nodes or leaf nodes, the agent selection module 404 may enable the score generation module 406 to compute a respective score value at each of the child nodes or leaf nodes. The score value may also be referenced to as an evaluation score, a heuristic score, a 'f' score, and/or the like. As would be understood, computing the respective score value at each of the child nodes or leaf nodes may correspond to computing the respective score value for respective each agent.

The score generation module 406 may generate the respective score value (hereinafter referenced to as 'f' score) at each of the child nodes or leaf nodes by estimating a numerical rating of a conversation path exists from the start node to each of the child nodes or leaf nodes and a progress of a next message from each of the child nodes or leaf nodes. The estimated numerical rating of the conversation path at a child node or leaf node may be indicated as a 'g' score, which provides a cost of the conversation path from the start node to the respective child node or leaf node based on a numerically evaluation of the conversation so far at the respective child node or leaf node. The estimated progress of the next message from the child node or leaf node may be indicated as a 'h' score, which provides a cost of the lowest cost path from the respective child node or leaf node to a goal node based on evaluation of remaining potential for the conversation at the respective child node or the leaf node. The goal node may correspond to the final message of the conversation. The goal node may be a node in the conversation tree that maximizes the 'f' score. Therefore, the goal node and the 'f' score may be relative to each other. By way of non-limiting example, the goal node may have the 'f' score of any value. The goal node may be selected when the obstacle or stop condition is met in the conversation tree. In some examples, the obstacle or stop condition may indicate one or more of: an exploration depth limit, a time limit, a compute budget limit, a score threshold, and/or the like. The exploration depth limit may indicate a maximum depth that has to be reached using the agent selection search before terminating or stopping performing of the agent selection search on the conversation tree. In an example, the exploration depth limit or maximum depth may indicate a value of '10', which may infer that the agent selection search performed on the conversation tree may result in a final conversation with at most 10 consecutive messages. The exploration depth limit may be triggered when the child node or leaf node in the associated depth is expanded. The time limit may be indicate time or duration within which the agent selection search has to be performed on the conversation tree. The score threshold may indicate a maximum score threshold, which may be compared with the 'f' score. For example, a child node with the 'f' score exceeding the score threshold may be considered as the goal node. The maximum score threshold may be a predefined numerical threshold on the 'f' score or the heuristic that terminates the agent selection search on the conversation tree and returns the goal node when reached. By way of non-limiting example, the score threshold or maximum score threshold may set to terminate or stop performing the agent selection search on the conversation tree when the score threshold or maximum score threshold is deemed acceptable for a high creativity score. In some examples, the compute budget limit may indicate a number of Floating Point Operations Per Second (FLOPS) defined for the problem or task. The FLOPS may measure performance of the multi-agent system 102 based on the number of FLOPS that the processor 114 of the multi-agent system 102 executes within a second using the solution generation module 402 to generate all the messages of the conversation, thereby solving the problem or task. In some other examples, the compute budget limit may correspond to different costs of API calls initiated by the agents to invoke the LLMs 204 and/or the non-LLM based tools (e.g., for image generation, web search, and/or the like) for generating the messages of the conversation. In some other examples, the compute budget limit may correspond to utilization of computing resources (e.g., processing resources, memory resources, communication resources, and/or the like) for generating the messages of the conversation. Therefore, selection of the goal node based on the obstacle or stop condition may provide the goal node (e.g., the child node or leaf node) with the highest 'f' score in the conversation tree by the nature of the agent selection search.

In some examples, the score generation module 406 may use evaluators 412 for estimating the 'g' score and the 'h' score at each of the child nodes or leaf nodes. The evaluators 412 may include a first set of evaluators 412a and a second set of evaluators 412b to estimate the 'g' score, and the 'h' score, respectively at each of the child nodes or leaf nodes. The first set of evaluators 412a and the second set of evaluators 412b may access the heuristic list from the database 126 and identify the heuristic determined for each of the sub-conversations, as well as the weight, and the evaluation functions defined with respect to each of the sub-conversations for measuring or computing the respective heuristic. Based on the identification of the heuristic, and the respective weight, and evaluation functions, the first set of evaluators 412a and the second set of evaluators 412b may estimate the 'g' score, and the 'h' score, respectively at each of the child nodes or leaf nodes. The evaluation functions may include LLM based functions, or non-LLM based functions, or a combination thereof.

The LLM based functions and the non-LLM based functions may be stored in the database 126. The LLM based functions may involve generation of prompts and accessing one or more of the LLMs 204 from the model database 202 based on the generated prompts. The one or more of the LLMs 204 accessed by the LLM based functions may include pre-trained LLMs for measuring the 'g' score or the 'h' score based on the respective heuristic defined for each of the sub-conversations. For example, at one of the child nodes, for example, at a node 'n,' the first set of evaluators 412a may use the LLM based functions to generate a prompt (e.g., a first prompt) like "rate this conversation on [heuristic]." Upon generating the prompt, the first set of evaluators 412a may provide the prompt to one of the LLMs 204 in the model database 202 and receive the 'g' score from a respective LLM for the node 'n.' Similarly, using the LLM based functions, the second set of evaluators 412b may generate a prompt (e.g., a second prompt) like "Considering this agent will participate next, rate how the conversation evolves on [heuristic]" at the node 'n'. The second set of evaluators 412b may provide the prompt to one of the LLMs 204 in the model database 202 and receive the 'h' score from the respective LLM for the node 'n.'

The non-LLM based functions may be accessed from a predefined library stored in the database 126 or may be created using any of the LLMs 204 from the model database 202. In some examples, the first set of evaluators 412a and the second set of evaluators 412b may use the non-LLM based functions such as a participation rate function and a Euclidian distance function, respectively. In accordance with the participation rate function, the first set of evaluators 412a may estimate the 'g' score at one of the child nodes, for example, a node 'n,' by determining a repartition of nodes in the conversation so far from the start node to the node 'n.' The 'g' score at the node 'n' may be high if the conversation so far from the start node to the node 'n' involves a uniform selection of the nodes or vice-versa. For example, the 'g' score may be estimated by computing a negative of a sum of absolute differences in contribution or participation frequencies of the nodes in the conversation so far from the start node to the node 'n' and a value of '1/n.' The second set of evaluators 412b may use the Euclidian distance function to estimate the 'h' score at the node 'n' by considering optimality of the conversation (e.g., considering that the conversation progress optimally). It should be noted that reusing the participation function, the 'h' score may be '0' every time, which is a maximal score for the node 'n' to contribute or participate in the conversation. In some other examples, the first set of evaluators 412a and the second set of evaluators 412b may use the non-LLM based functions such as a verbose function and an optimality assumption function, respectively. The first set of evaluators 412a may use the verbose function to estimate the 'g' score at the node 'n' by measuring a total length of the conversation so far from the start node to the node 'n'. The second set of evaluators 412b may use the optimality assumption function to estimate the 'h' score at the node 'n' as a product of a remaining depth left in the conversation tree and a maximum message length in the conversation, by considering the optimality of the conversation. In some other examples, the second set of evaluators 412b may use a posterior prediction function to estimate the 'h' score at the node 'n' as a product of a remaining depth left in the conversation tree and an average message length in the conversation.

For example, consider that among the agents 112a-112n, agents {*a*₁, ......, *a_{M}*} are available for solving a problem 'P' corresponding to a conversation 'C.' The conversation 'C' may have sub-conversations {*c*₁*, ... ... , c_{X}*} corresponding to sub-problems of the problem 'P'. In such a scenario, the agent selection module 404 may initialize the conversation tree with a start node and identify the child nodes or leaf nodes for the start node. Once the child nodes or leaf nodes for the start node are identified, the score generation module 406 may use the first set of evaluators 412a (e.g., *E*_{*g*1}*, ... . E_{gX}*) and the second set of evaluators 412b (e.g., *E*_{*h*1}, *... . E_{hX}*) for estimating the 'g' score and the 'h' score at each of the child nodes or leaf nodes, respectively. In an example, the first set of evaluators 412a may estimate the 'g' score (g (n)) at a child node (node 'n') with respect to each of the sub-conversations of the conversation 'C' as: $g \left(n\right) = {\sum }_{i = 1}^{X} {α}_{i} {E}_{gi} \left(n\right)$ Wherein, '*i*' may represent a sub-conversation of the conversation 'C' and '*i*' may vary from '1' to 'X,' '*αᵢ*' may represent a weight accessed from the heuristic list created or defined for each of the sub-conversations for defining the respective heuristic, and '*E_{gi}*(*n*)' may be a numerical rating generated by the first set of evaluators 412a at the node 'n' with respect to the sub-conversation *'i.'* The first set of evaluators 412a may generate the numerical rating '*E_{gi}*(*n*)' by accessing the description of the agent corresponding to the node 'n' and identifying a conversation history that leads to the node 'n' from the start node with respect to each of the sub-conversations. Therefore, the 'g' score at the node 'n' may be estimated by linearly combining the numerical rating associated with each of the sub-conversations. Such a 'g' score may rate the conversation history that leads to the node 'n' so far with an added effect of having the next selected agent.

Similarly, the second set of evaluators 412b may estimate the 'h' score (h (n)) at the child node (node 'n') with respect to each of the sub-conversations of the 'C' as: $h \left(n\right) = {\sum }_{i = 1}^{X} {α}_{i} {E}_{hi} \left(n\right)$ wherein, '*Eₕᵢ*(*n*)' may be a numerical rating generated by the second set of evaluators 412b at the node 'n' with respect to the sub-conversation '*i*.' The second set of evaluators 412b may generate the numerical rating '*E_{gi}*(*n*)' by accessing the description of the agent corresponding to the node 'n' and identifying a remaining potential of the conversation at the node 'n' to satisfy each of the sub-conversations. Therefore, the 'h' score may estimate how much more each sub-conversation may be improved or satisfied until the conversation ends from the respective node 'n.'

Based on the respective 'g' score (*g*(*n*)) and 'h' score *'h*(*n*)' estimated with respect to each of the sub-conversations, the score generation module 406 may compute the 'f' score (*f*(*n*)) at the node 'n'. Such a 'f' score may indicate past and future performance of a respective agent for selection, as the 'g' score reflects the conversation history, and the 'h' score reflects the remaining potential of the conversation at each respective node. Therefore, the 'f' score may give a more direct and precise measure of what agents should be selected for a next message. For example, the 'f' score (*f*(*n*)) at the node 'n' may be computed as: $f \left(n\right) = g \left(n\right) + h \left(n\right)$

In some examples, the 'f' score may be computed at each of the child nodes or leaf nodes by considering the heuristic to bias the agent selection search towards being completely a depth-first search or considering the heuristic inversely to bias the agent selection search more towards a breadth-first search for exploring more agent selection options via the agent selection search. Therefore, the heuristic may be determined as a depth of node (e.g., node depth). In such a case, the 'f' score at the child node, node 'n,' may be computed as: $f \left(n\right) = node depth \left(n\right) \times ∝$ wherein 'node depth' may represent the depth of the child node, node 'n,' in the conversation. The child node, node 'n,' with the highest 'f' score may be considered as the depth node, which may more likely to be expanded or explored first. Inversely, the 'f' score at the child node, 'node n' may be computed as: $f \left(n\right) = node depth \left(n\right) \times - ∝$ wherein, the child node, node 'n,' with the highest 'f' score may be considered as a shallow node, which may more likely to be expanded or explored first. Therefore, the computation of the 'f' score based on the depth node may result in a faster agent selection search with reduced utilization of computing resources.

Once the 'f' score is calculated at each of the child nodes or leaf nodes, the agent selection module 404 may remove the start node associated with the child nodes or leaf nodes from an open list and add the start node to a closed list. The open list may include a priority queue of the nodes, which may be used to explore the nodes to contribute to or participate in the conversation. The closed list may include the nodes that have been evaluated. As would be understood, when a node is in the closed list, then the highest 'f' score value or the lowest cost path for the node has already been determined. Further, based on the 'f' score of each of the child nodes or leaf nodes, the agent selection module 404 may select a child node or leaf node with the highest 'f' score among the other child nodes or leaf nodes. Therefore, the child node in the conversation tree may only be selected and expanded, if the child node (node 'n') has the highest 'f' score, which is represented as: $node n = {argmax}_{Nε \left\{child or leaf nodes\right\}} \left(g\left(n\right)+h\left(n\right)\right)$

The selected child node or leaf node may correspond to an agent from the first agents identified for the first message of the conversation. The child node or leaf node may be selected as a first node (e.g., a corresponding agent from the first agents may be selected as a first agent) for the first message of the conversation. Upon selecting the first node, the agent selection module 404 may enable the first node (e.g., the first agent) to contribute to participate in the first message of the conversation. Contributing to or participating in the first message of the conversation by the first node (e.g., the first agent) may refer to generating or writing the first message using the first node (e.g., the first agent).

Once the first message is generated, the agent selection module 404 may add the first node to the open list. The agent selection module 404 may further identify child nodes or leaf nodes for the first node (e.g., the first agent) contributed to or participated in the first message. The identified child nodes or leaf nodes for the first node may correspond to any of the agents 112a-112n, for example, second agents identified from the multi-agent pool 108 based on the description and capabilities of each of the agents 112a-112n. Upon identifying the child nodes or leaf nodes for the first node, the score generation module 406 may compute the 'f' score (as described above) at each of the child nodes or leaf nodes identified for the first node. Among the child nodes or leaf nodes, the agent selection module 404 may select a child node or leaf node having the highest 'f' score. The selected child node or leaf node may correspond to an agent from the second agents. The child node or leaf node may be selected as second node (e.g., a corresponding agent from the second agents may be selected as a second agent) to contribute or participate in a second message of the conversation. The agent selection module 404 may iteratively perform the above-described agent selection steps for next messages (e.g., third, fourth, fifth, sixth, and/or the like messages) for a pre-defined number of iterations or until the goal node has been reached. The agent selection steps may include:
(i) identifying the child nodes or leaf nodes for a node (e.g., in continuation to the second message, the node may include the second node or second agent, a third node or third agent, a fourth node or fourth agent, a fifth node or fifth agent, and/or the like) that contributed to or participated in a previous message (e.g., the second message, a third message, a fourth message, a fifth message, and/or the like);
(ii) compute the 'f' score (using the score generation module 406) at each of the identified child nodes or leaf nodes; and
(iii) selecting, among the child nodes or leaf nodes, a child node or a leaf node as a next node (e.g., a third node or third agent, a fourth node or fourth agent, a fifth node or fifth agent, a sixth node or sixth agent, and/or the like) for contributing to or participating in a next message (e.g., a third message, a fourth message, a fifth message, a sixth message, and/or the like).

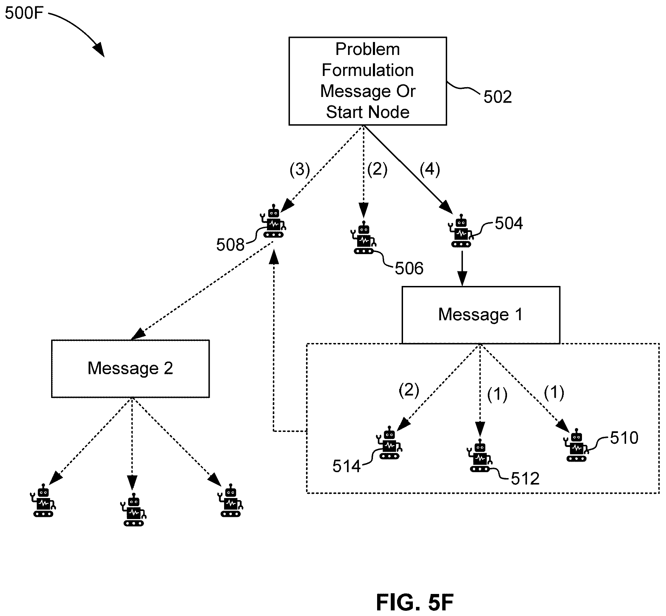

Additionally, or alternatively, the agent selection module 404 may automatically initiate backtrack of the conversation if the conversation is sub-optimal to an earlier promising node in time and then explore alternative nodes or agents for a next message while determining the lowest cost path for the conversation. For example, consider that a child node or leaf node (any agent of the first agents) identified for the start node may have higher 'f' score than the child nodes or leaf nodes (any agent of the second agents) of the first node or first agent contributed to or participated in the first message. In such a scenario, the agent selection module 404 may terminate the first node or first agent, backtrack the conversation to the identified child node or leaf node of the start node (e.g., with the previous second highest 'f' score node among the child nodes or leaf nodes of the start node), and continue performing the agent selection steps from such a child node or leaf (instead of the first node or first agent). Therefore, the optimal dialog path may be generated for the conversation by involving selection of the optimal agents for the messages of the conversation. An example illustration of backtracking the conversation is depicted in FIG. 5F.

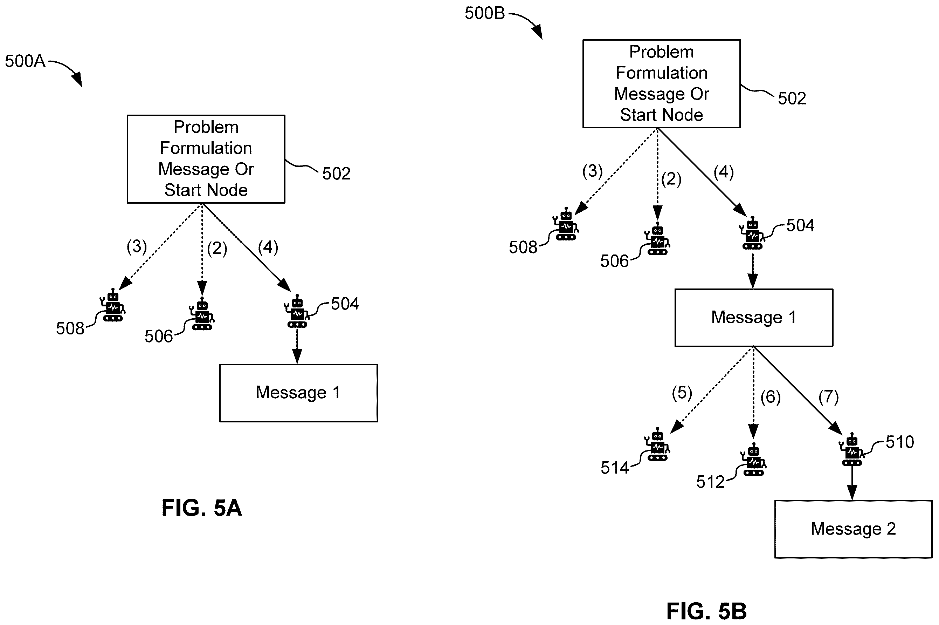

Once the goal node is reached or the agent selection steps are performed for the pre-defined number of iterations, the solution generation module 402 may generate the solution or outcome for the problem. The solution or outcome may be generated based on or may correspond to messages (e.g., the first, second, third, fourth, and/or the like, messages) generated using the nodes (e.g., the child nodes or leaf nodes) or agents selected for the conversation. The generated solution or outcome may include the optimal solution or outcome for the problem. An example illustration of generating the optimal solution or outcome by selecting the agents for the conversation based on determination of the optimal dialog path is depicted in FIGS. 5A-5E.

In another example implementation, the solution generation module 402 may generate 'top K' number of solutions or outcomes for the problem and select a best solution or outcome (e.g., optimal solution or outcome) among the 'top K' number of solutions for the problem. For generating the 'top K' number of solutions, the solution generation module 402 may enable the agent selection module 404 to operate in conjunction with the score generation module 406 for iterating the conversation for a 'K' number of iterations or times. The value 'K' may be less than a threshold value defined by the user of the user device 106. The conversation may be iterated for the 'K' number of iterations by performing different agent selection searches on the conversation tree using variation parameters. An agent selection search performed in an iteration may involve initializing the conversation tree with the start node and iteratively performing the agent selection steps for the pre-defined number of iterations or until the goal node has been reached, using a different variation parameter from a previous iteration.

The solution generation module 402 may enable a configuration module 408 to generate respective variation parameters for each iteration. The variation parameters may include a first set of variation parameters and a second set of variation parameters. The first set of variation parameters may be stochastic. For example, the configuration module 408 may access an LLM from the LLMs 204 stored in the model database 202 and vary parameters of the LLM to generate the first set of variation parameters by processing the heuristic list, the agents available in the multi-agent pool 108, the conversation tree corresponding to the available agents, and/or the like. The parameters of the LLM varied to generate the first set of variation parameters may include temperature and seed. By way of non-limiting example, the configuration module 408 may configure or set a value of temperature of each of the LLMs to greater than '0' for generating the first set of variation parameters. Therefore, the first set of variation parameters may indicate variation in parameters of the LLMs 204 being used by the agents selected for the conversation and/or variation in the evaluation functions, and/or variations in the heuristic determined for each of the sub-conversations, while other aspects may be retained from a previous iteration (e.g., the other aspects may be same or equal) for iterating the conversation. Herein the other aspects may refer to the first message, the agents selected for the conversation, the prompts used for estimating the 'g' score and the 'h' score, and/or the like. The variation in the evaluation functions may indicate a change in usage of the LLM based functions or non-LLM based functions. By way of non-limiting example, the configuration module 408 may switch between the LLM based functions and the non-LLM based functions in each iteration of iterating the conversation. The variation in the heuristic may indicate a change in defining of the heuristic for each of the sub-conversations. By way of non-limiting example, the configuration module 408 may change the heuristic like creativity to staleness for a sub-conversation 1, from the previous iteration. Therefore, usage of the first set of variation parameters in each iteration may cause stochasticity in the agent selection search performed on the conversation tree in a respective iteration. The stochasticity may allow the 'top K' number of solutions or outcomes to include different solutions or outcomes.

The second set of variation parameters may indicate variation in initial search parameters for the same problem or conversation. Examples of the initial search parameters may include, but are not limited to, the agents selected for the conversation, the prompts used for estimating the 'g' scores or the 'h' scores, the heuristic determined for each of the sub-conversations, weights defined for each of the sub-conversations, and/or the like. Therefore, for each iteration, the second set of variation parameters may indicate variation in the selection of agents, prompts, heuristic, and/or the like, from the previous iteration of iterating the conversation. Therefore, the 'top K' number of solutions or outcomes generated by iterating the conversation for the 'K' number of iterations may include different solutions or outcomes.

Upon generating the 'top K' number of solutions or outcomes, the solution generation module 402 may enable the ranking module 410 to generate a respective score for each of the 'top K' number of solutions or outcomes and rank each of the 'top K' solutions or outcomes based on the respective score. In some examples, the ranking module 410 may generate the respective score each of the 'top K' number of solutions using a score evaluation function 414. By way of non-limiting example, consider that a conversation corresponds to writing a code to solve a problem. In such an example, the 'top K' number of solutions or outcomes generated by iterating the conversation for the 'K' number of times may include different codes for solving the problem. The score evaluation function 414 may be used to perform unit tests on each of the codes included in respective each of the 'top K' number of solutions or outcomes to evaluate execution time of each of the codes (e.g., evaluating how fast each code runs). Based on the evaluation, the respective score may be generated for each of the codes. It should be noted that the score evaluation function 414 may be different from the heuristic. For example, in case of generation of the codes, the score evaluation function 414 may evaluate how fast each of the codes runs, while the heuristic may score or evaluate the code for simplicity, promote debugging, technique exploration, and/or the like. For another example, in case of generating campaign strategies for a product, the score evaluation function 414 may evaluate pair-wise preferences between campaign strategies generated from the 'top K' number of solutions, while the heuristic may indicate targeting aspects of the conversation such as creativity, concrete action plans, and/or the like. In some other examples, the ranking module 410 may generate the respective score each of the 'top K' number of solutions using an LLM of the LLMs 204 from the model database 202. The LLM may be used as a judge or pairwise ranking variants for automatically generating the score for each of the 'top K' number of solutions or outcomes.

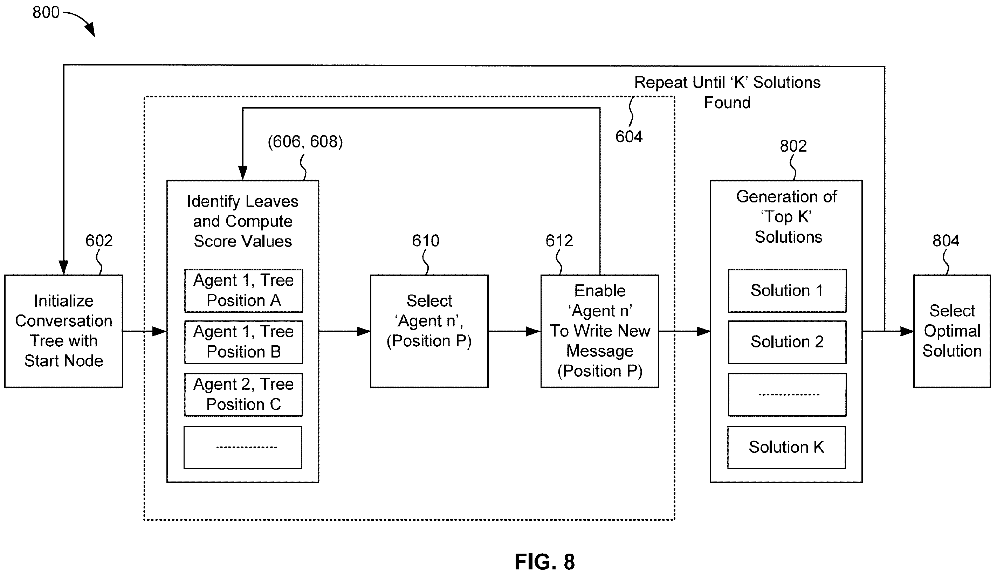

Once each of the 'top K' number of solutions or outcomes are ranked, the solution generation module 402 may identify a solution or outcome having the highest rank among other solutions or outcomes of the 'top K' number of solutions as the optimal solution or outcome for the problem corresponding to the conversation. An example process flow of selecting the optimal solution or outcome from the 'top K' number of solutions or outcomes is depicted in FIG. 8.

In yet another example implementation, the solution generation module 402 may generate 'N' number of solutions or outcomes (also be referenced to as 'best-of-N' solutions or outcomes) for the problem and select a best solution or outcome (e.g., an optimal solution or outcome) among the 'N' number of solutions for the problem. For generating the 'N' number of solutions, the solution generation module 402 may enable the agent selection module 404 to operate in conjunction with the score generation module 406 for iterating the conversation for a 'N' number of iterations or times. The value 'N' may have an equal value and less than a threshold value defined by the user of the user device 106.

The conversation may be iterated for the 'N' number of iterations by performing the agent selection searches on the same conversation tree, using unexplored nodes. For example, the conversation iterated or facilitated in a first iteration may be stored. A child node or leaf node (e.g., any agent of the second plurality of agents) having the second highest 'f' score in the stored conversation may be considered as the start node for facilitating the conversation in a second iteration. Therefore, the 'N' number of solutions or outcomes generated using the different unexplored nodes or agents may include different solutions or outcomes.

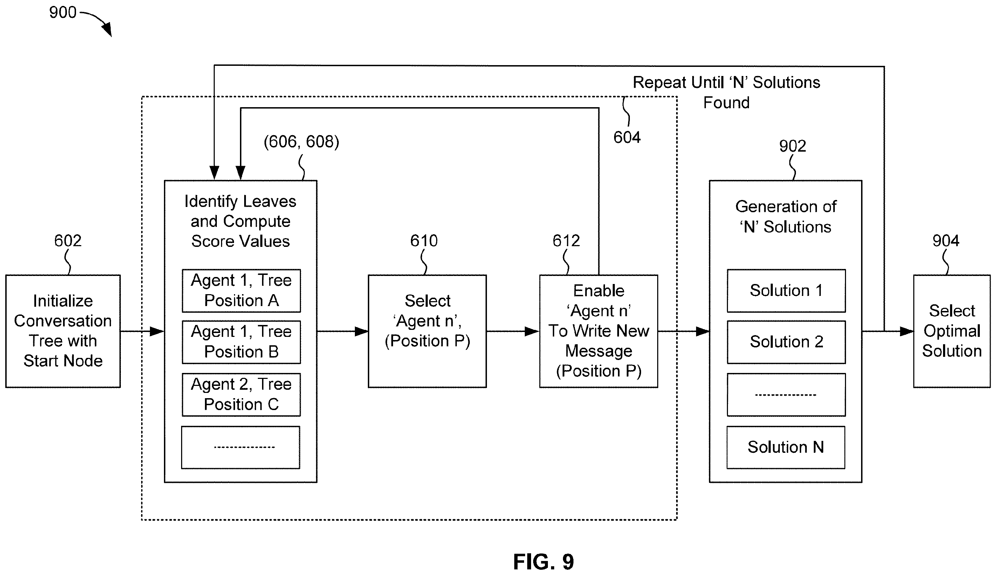

Upon generating the 'N' number of solutions or outcomes, the solution generation module 402 may enable the ranking module 410 to generate a respective score for each of the 'N' number of solutions or outcomes and rank each of the 'N' number of solutions or outcomes based on the respective score. In some examples, the ranking module 410 may use the score evaluation function 414 for generating the respective score for each of the 'N' number of solutions or outcomes. In some other examples, the ranking module 410 may use an LLM from the LLMs 204 of the model database 202 for generating the respective score for each of the 'N' number of solutions or outcomes. Once each of the 'N' number of solutions or outcomes are ranked, the solution generation module 402 may identify a solution or outcome having the highest rank among other solutions or outcomes of the 'N' number of solutions, as the optimal solution or outcome for the problem corresponding to the conversation. An example process flow of selecting the optimal solution or outcome from the 'N' number of solutions or outcomes is depicted in FIG. 9.

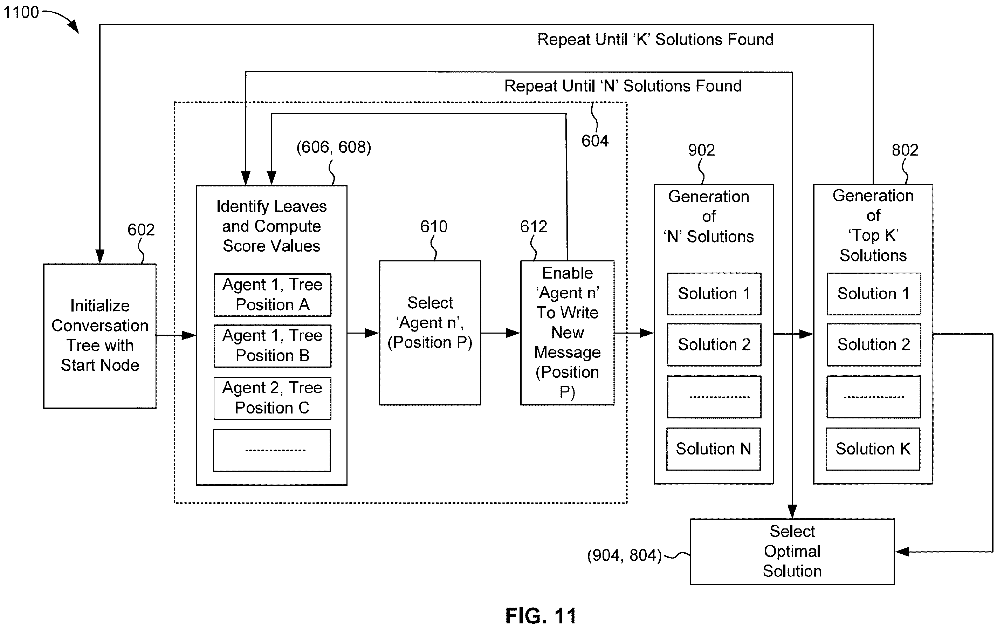

In yet another example implementation, the solution generation module 402 may generate both the 'top K' number of solutions or outcomes and the 'N' number of solutions or outcomes at a time. Such a generation may allow to use the variation parameters for facilitating the conversation in each iteration, while reusing previously computed nodes (e.g., squeezing more value out of each conversation). An example process flow of selecting the optimal solution or outcome by generating both the 'top K' and the 'N' number of solutions or outcomes is depicted in FIG. 11.

FIGS. 5A-5E depict an example illustration of generating an optimal solution for a problem through a conversation, in accordance with implementations of the present disclosure. In an example, consider that the multi-agent system 102 (depicted in FIG. 1) receives an input data from the user through the user device 106 for creating a marketing campaign to launch a new product (e.g., a problem). The new product may include a beverage targeting a certain type of users. The input data includes a problem formulation message. The problem formulation message describes the problem to be solved through a conversation.

After receiving the input data, the multi-agent system 102 may perform the initialization phase to create a conversation tree, identify sub-conversations of the conversation, and create a heuristic list for the sub-conversations. In an example herein, the multi-agent system 102 may create the conversation tree by identifying three agents available for the conversation, based on the description and capabilities of each agent in the multi-agent pool 108 (depicted in FIG. 1). It should be noted that the multi-agent system 102 may identify any number of agents for the conversation, for simplicity or ease of description, the conversation tree of the three agents is illustrated in FIGS. 5A-5E. The three agents may include a sustainability agent, a search agent, and a market research agent. The sustainability agent and the market research agent may be LLM-based agents. For example, the LLM-based agents may use the LLMs 204 from the model database 202 (depicted in FIGS. 2 and 4) for performing intended functions. The search agent may be a non-LLM based agent. For example, the search agent may include a web search Application Programming Interface (API) with natural language for fact checking. The multi-agent system 102 may identify three sub-conversations (corresponding to sub-problems of the problem) such as creativity, truthfulness, and problem completion, however it may be obvious to a person skilled in the art that multiple sub-conversations may be created instead of three. The heuristic list may indicate a heuristic to be measured or computed for each of the creativity, the truthfulness, and the problem completion. The heuristic list may also indicate weights, descriptions, and evaluation functions for the creativity, the truthfulness, and the problem completion. By way of non-limiting example, the weights may be defined on a scale of 1-5 by determining how important the creativity, the truthfulness, and the problem completion to create the marketing campaign. The evaluation functions may include the LLM based functions and the non-LLM based functions. The initialization phase described in detail in conjunction with FIGS. 2 and 3, therefore repeated description is omitted herein for sake of brevity.

After the initialization phase, the multi-agent system 102 may perform an agent selection phase to generate a solution for the problem by dynamically selecting the agents from the multi-agent pool 108 during a progression of the conversation itself. For selecting the agents, the multi-agent system 102 may the agent selection search on the conversation tree of three agents, which is described in detail below.

In the agent selection phase, the multi-agent system 102 performs conversation tree initialization and a first exploration 500A, as depicted in FIG. 5A. The multi-agent system 102 initializes the conversation tree with the problem formulation message as a start node 502. The start node 502 may be initialized based on the initialization message received from the user through the user device 106. The multi-agent system 102 identifies three child nodes (leaf nodes or leaves) 504, 506, and 508 for the start node 502. The child nodes 504, 506, and 508 may correspond to the sustainability agent, the search agent, and the market agent, respectively. Upon the identification, the multi-agent system 102 computes the score value ('f' score) at each of the three child nodes 504, 506, and 508. The 'f' score at a child node may be computed by estimating a 'g' score and a 'h' score with respect to each of the sub-conversations such as the creativity, the truthfulness, and the problem completion, based on the created heuristic list. For example, as the LLM based functions are defined as the evaluation functions for the creativity, the 'g' score for the child node with respect to the creativity may be estimated using an example prompt like "Rate the creativity of the following conversation on a scale of 1 to 10: [Problem Formulation Message]." Similarly, the 'h' score for the child node with respect to the creativity may be estimated using an example prompt like "Agent X is [agent X description]. How much would this conversation's creativity improve if agent X was to speak next on a scale of 1 to 10: [Problem Formulation Message]." Herein, "Agent X" may correspond to the child node and may be any of the agent from the sustainability agent, the search agent, and the market agent. The 'g' score may be estimated by numerically rating a conversation path so far (e.g., a conversation history indicating past performance of agents) from the start node 502 to each child node of the child nodes 504, 506, and 508. Therefore, the 'g' score may indicate a measure of how appropriate a conversation path is so far from the start node 502 to each child node. The 'h' score may be estimated based on evaluating remaining potential or performance of each child node of the child nodes 504, 506, and 508 until the conversation ends (e.g., future performance prediction of agents) and accordingly rating how much more each agent corresponding to respective each child node may increase the 'f' score based on its description and the conversation path. Therefore, the agent selection method of the present disclosure not only estimates remaining potential of each child node or leaf node, but also considers the optimal child node or leaf node (e.g., with the highest 'f' score) for further expansion in a breath-wise manner if the respective child node or leaf node remains the optimal. In an example, as depicted in FIG. 5A, the 'f' scores computed for the child nodes 504, 506, and 508 corresponding to the respective sustainability agent, search agent, and market agent may include 4, 2, and 3, respectively. Based on the 'f' scores, the multi-agent system 102 selects the child node 504 corresponding to the sustainability agent (with the highest 'f' score) as a first node or first agent and enable the sustainability agent to generate a first message (Message 1). For example, the child node 504 may be considered as an optimal node or maximizing node for further expansion.

Based on the first message (Message 1), the multi-agent system 102 performs a second exploration process 500B to identify a node or agent for a second message (Message 2), as depicted in FIG. 5B. The multi-agent system 102 identifies child nodes 510, 512, and 514 for the child node 504 corresponding to the sustainability agent. The child nodes 510, 512, and 514 may correspond to the search agent, the market agent, and the sustainability agent. The multi-agent system 102 computes 'f' scores for the child nodes 510, 512, and 514 correspond to the search agent, the market agent, and the sustainability agent. The 'f' score at each of the child nodes 510, 512, and 514 may be computed based on a respective 'g' score and 'h' score estimated with respect to each of the creativity, the truthfulness, and the problem completion. The 'g' score may be estimated by numerically rating a conversation path so far (e.g., a conversation history indicating past performance of agents) from the start node 502 to each child node of the child nodes 510, 512, and 514 with respect to each of the creativity, the truthfulness, and the problem completion. The 'h' score may be estimated based on a remaining potential of the conversation at each child node of the child nodes 510, 512, and 514 (e.g., future performance prediction of agents) to satisfy or improve each of the creativity, the truthfulness, and the problem completion. Based on the 'f' scores, the multi-agent system 102 select the child node 510 corresponding to the search agent as a second node or second agent to generate the second message (Message 2), as depicted in FIG. 5B. For example, the child node 510 may be the optimal node or maximizing node continuing a previously expanded node (e.g., the child node 504), thereby expanding the conversation in depth.

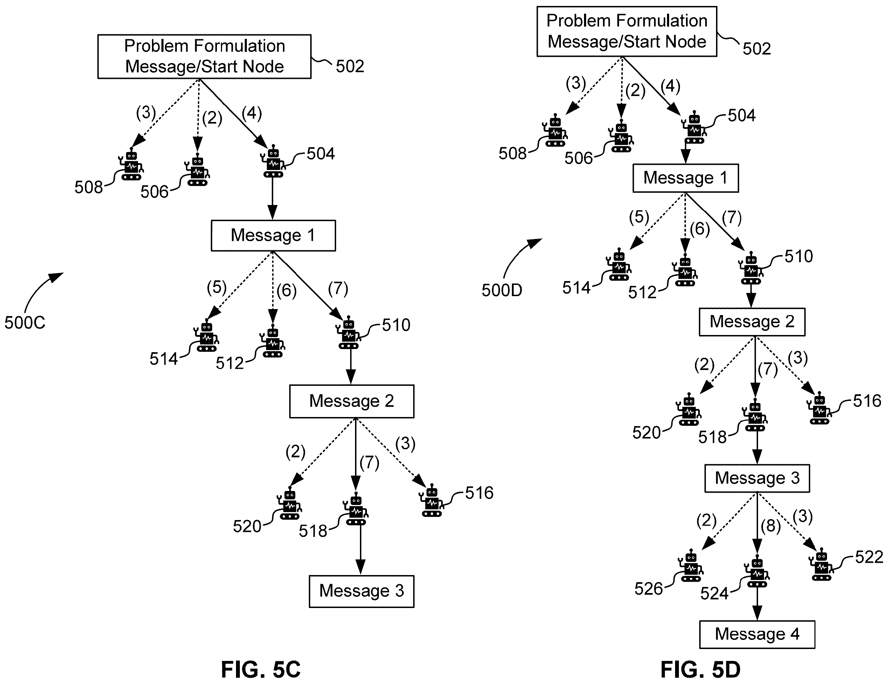

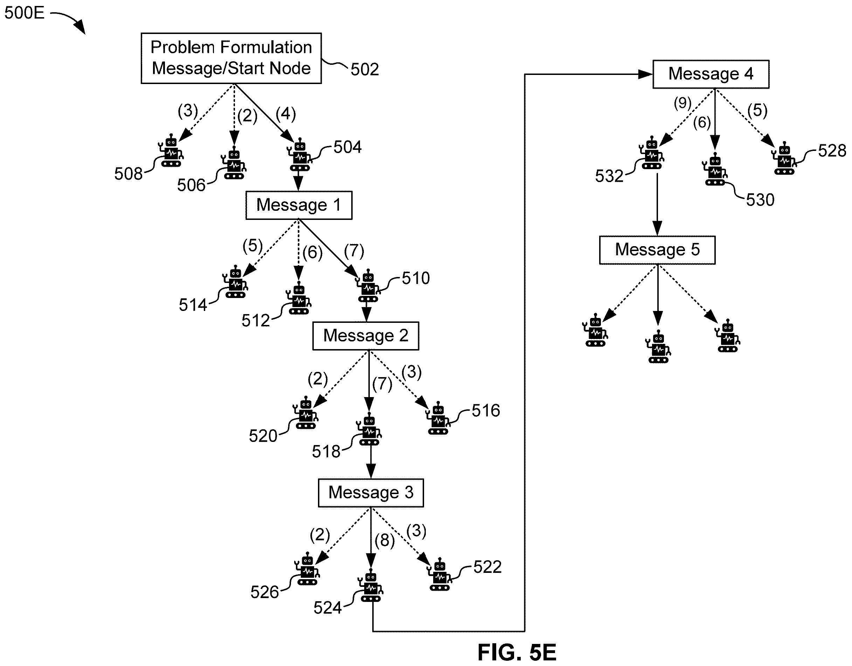

In continuation with the second message (Message 2), the multi-agent system 102 performs a third exploration process 500C, a fourth exploration process 500D, and a fifth exploration process 500E, as depicted in FIGS. 5C, 5D, and 5E, respectively. Each of the third exploration process 500C, the fourth exploration process 500D, and the fifth exploration process 500E may be performed similar to the above-described second exploration process 500B. From the third exploration process 500C, as depicted in FIG. 5C, the multi-agent system 102 selects, among child nodes 516, 518, and 520, a child node 518 corresponding to the sustainability agent as a third node or third agent for generating a third message (Message 3). From the fourth exploration process 500D, as depicted in FIG. 5D, the multi-agent system 102 selects, among child nodes 522, 524, and 526, a child node 524 corresponding to the market agent for generating a fourth message (Message 4). From the fifth exploration process 500E, as depicted in FIG. 5E, the multi-agent system 102 selects, among child nodes 528, 530, and 532, a child node 532 corresponding to the sustainability agent for generating a fifth message (Message 5). After the fifth exploration process 500E, the multi-agent system 102 determines that the child node 532 as a goal node, as depicted in FIG. 5E. Determining the goal node is already described in detail in conjunction with FIG. 4, therefore repeated description is omitted herein. Therefore, upon determining the goal node, the multi-agent system 102 may generate the solution for the problem based on the messages (Message 1, Message 2, Message 3, Message 4, and Message 5,) generated by the selected agents corresponding to the child nodes 504, 510, 518, 524, and 532. Further, the generated solution may be the optimal solution, as the solution is generated using the optimal dialog path (e.g., a path with the lowest cost or the highest score value ('f' score)) from the start node to the goal node. In some examples, if the goal node has not been determined, the multi-agent system 102 may backtrack the conversation to a previous child node with the previously second highest 'f' score and initiates the exploration process on the previous child node.

In some examples, if the multi-agent system 102 identifies the child node with the highest 'f' score elsewhere in the conversation tree instead at the current child node, the multi-agent system 102 may resume from an alternative path by backtracking the conversation to the alternative path. An example backtracking process 500F is depicted in FIG. 5F. For example, consider that, after performing the second exploration process 500B on the child node 504 corresponding to the sustainability agent, the multi-agent system 102 identifies that the child node 508 of the start node 502 has the higher 'f' score compared to each of the child nodes 510, 512, and 514, of the child node 504 corresponding to the sustainability agent. Therefore, the first message (Message 1) generated by the child node 504 corresponding to the sustainability agent may be considered as not very creative, truthful, or did not contribute significantly to solve the problem. As the first message (Message 1) hinders the child nodes 510, 512, and 514 from increasing the creativity, the truthfulness, and the problem completion and the child node 508 with the highest 'f' score is found elsewhere in the conversation tree, the multi-agent system 102 backtracks the conversation to the child node 508 corresponding to the market agent and continues the exploration process on the child node 508. Backtracking the conversation may aid in determining the optimal dialog path for the conversation.

Further, consider an example scenario where five agents such as a sustainability agent, a market agent, a search agent, a design agent, and an influencer media agent are identified for a problem of creating a campaign. In such a scenario, selection of the agents for contributing to, or participating at any given point in the conversation by performing the agent selection search (as described above) on the conversation tree according to the present disclosure is illustrated in an example table 2.

**Table 2: Optimal Selection of Agents**

| Agent | Message |
|---|---|
| | Problem Formulation Message |
| Sustainability Agent | Message 1 |
| Market Agent | Message 2 |
| Search Agent | Message 3 |
| Sustainability Agent | Message 4 |
| Design Agent | Message 5 |
| Influencer Media Agent | Message 6 |

As illustrated in the example table 2, due to selection of the agents for the conversation based on the lowest cost path or optimal dialog path, the conversation may be more balanced. For example, the search agent may be selected with an improved timing after the market agent to increase the truthfulness. With the balanced conversation, the optimal solution may be generated for the problem while exploring various topics required for creation of the marketing campaign, as illustrated in the example table 2.

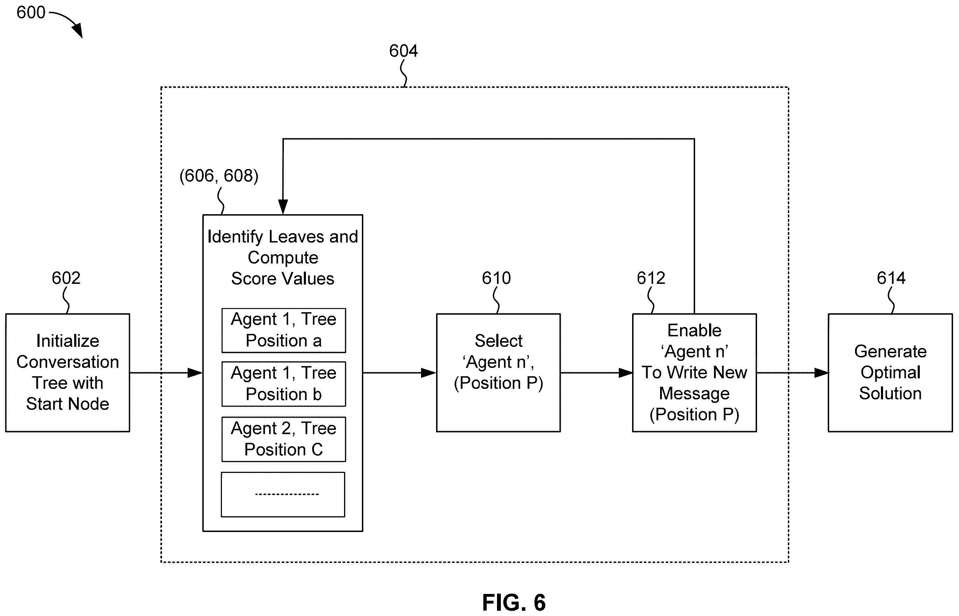

FIG. 6 depicts an example process flow 600 of generating an optimal solution for a problem, in accordance with implementations of the present disclosure. The process flow 600 may be executed by the multi-agent system 102 using the components 120-124, as described in relation to FIGS. 1-4. The multi-agent system 102 may receive an input data including a problem formulation message or initial message. The problem formulation message may indicate a problem to be solved through a conversation. Upon receiving the input data including the problem formulation message, the multi-agent system 102 may identify sub-conversations corresponding to sub-problems of the problem. Thereafter, the multi-agent system 102 may select agents from the multi-agent pool 108 (depicted in FIG. 1) for contributing to or participating in the conversation by performing the agent selection search on the conversation tree. The selected agents may interact, reason, and validate each other's output through the structured conversation to generate the solution for the problem.

As depicted in FIG. 6, the agent selection search performed on the conversation tree includes initializing 602 the conversation tree with a start node or root node corresponding to the problem formulation message and iteratively performing 604 the agent selection steps for a predefined number of iterations or until reaching a final node or a goal node in the conversation tree. Performing 604 the agent selection steps in each iteration may include:
(i) Identifying 606 leaves (e.g., first agents second agents, third agents, fourth agents, fifth agents, and/or the like). In a first iteration, the leaves may be identified for the start node corresponding to the problem formulation message. In subsequent iterations, the leaves may be identified for a node or an agent that has been contributed to or participated in a previous message (e.g., an agent 'n' participated in the previous message). The leaves may include agents (corresponding to child nodes or leaf nodes) present in the closed list. The agents present in the closed list may be located at different positions in the conversation tree. For example, the first agents may include an agent 1 located at a position 'a', an agent 1 located at a position 'b', an agent 2 located at a position 'c', and other agents located at different positions.
(ii) Computing 608 'f' scores (score values) for the leaves (e.g., the agents corresponding to the child nodes or leaf nodes). Computation of the 'f' scores is described in detail in conjunction with FIG. 4 along with the score generation module 406, therefore repeated description is omitted herein for sake of brevity.
(iii) Selecting 610, among the leaves, an agent 'n' with the highest 'f' score. The agent 'n' may be located at a position 'p' in the conversation tree. and
(iv) Enabling 612 the selected agent 'n' to generate or write a new or subsequent or next message at the position 'p'. Therefore, an optimal agent may be selected to participate at any given point in the conversation.

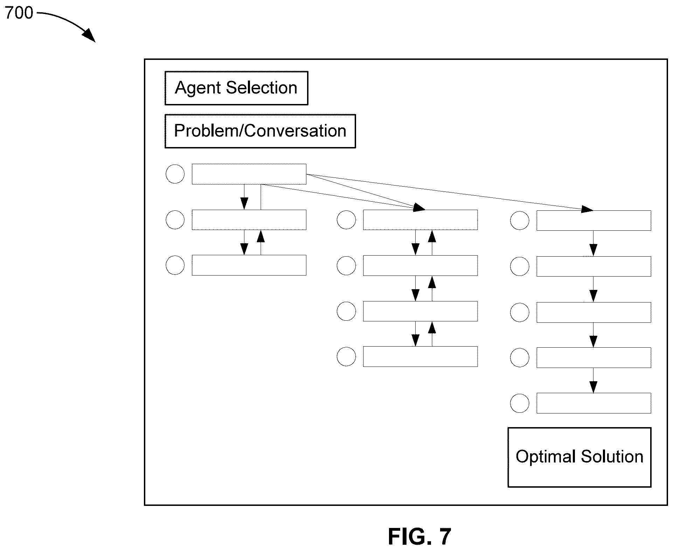

After performing the agent selection steps for the pre-defined number of iterations or after reaching the goal node, the multi-agent system 102 generates 614 an optimal solution for the problem. The optimal solution may include messages or information exchanged by the selected agents in the conversation till the goal node, or in the pre-defined number of iterations. An example illustration 700 of generating the optimal solution is described in FIG. 7.

FIG. 8 depicts an example process flow 800 of generating an optimal solution for a problem from a 'top K' number of solutions, in accordance with implementations of the present disclosure. The process flow 800 may be executed by the multi-agent system 102 using its components 120-124, as described in relation to FIGS. 1-4. The multi-agent system 102 may determine to generate the 'top K' number of solutions, when the multi-agent system 102 or the user is required to bring the stochasticity in the solutions with the variation parameters.

The multi-agent system 102 generates 802 the 'top K' number of solutions by iterating the conversation for 'K' number of iterations. The conversation may be iterated for 'K' number of times by performing different agent selection searches on the conversation tree with the different variation parameters. The variation parameters are described in detail in conjunction with FIG. 4, therefore repeated description is omitted herein for sake of brevity. An agent selection search performed during each iteration using a different variation parameter from a previous iteration includes initializing 602 the conversation tree with a start node or root node corresponding to the problem formulation message and iteratively performing 604 the agent selection steps for a predefined number of iterations or until reaching a final node or a goal node in the conversation tree. Performing 604 the agent selection steps in each iteration may include (i) identifying 606 leaves (e.g., agents such as first agents, second agents, third agents, fourth agents, fifth agents, and/or the like, corresponding to the child nodes or leaf nodes) for the start node or an agent (e.g., an agent 'n') that has been contributed to or participated in a previous message; (ii) computing 608 'f' scores (score values) for the leaves; (iii) selecting 610, among the leaves, an agent 'n' with the highest 'f' score. The agent 'n' may be located at a position 'p' in the conversation tree; and (iv) enabling 612 the selected agent 'n' to generate or write a new or subsequent or next message at the position 'p'.

Upon generating the 'top K' number of solutions, the multi-agent system 102 selects 804 an optimal solution from the 'top K' number of solutions for the problem. The optimal solution may be selected by scoring and ranking each of the 'top K' number of solutions based on the score evaluation function 414 or using the LLM from the LLMs 204 from the model database 202 (depicted in FIG. 4).

FIG. 9 depicts an example process flow 900 of generating an optimal solution for a problem from a 'N' number of solutions, in accordance with implementations of the present disclosure. The process flow 900 may be executed by the multi-agent system 102 using its components 120-124, as described in relation to FIGS. 1-4.

The multi-agent system 102 generates 902 the 'N' number of solutions by iterating the conversation for 'N' number of iterations. The conversation may be iterated for 'N' number of times by performing the agent selection searches on the same conversation tree by reusing agents corresponding to previously computed and unexplored nodes (e.g., using the nodes with the second highest 'f' scores). Therefore, generation of the 'N' number of solutions may be cost-effective and time-effective and may ensure continuation of iterating the conversation during the multiple iterations without starting from scratch (e.g., from the start node).

An agent selection search performed during each iteration using the conversation tree of a previous iteration may include initializing 602 the conversation tree with a start node or root node corresponding to the problem formulation message and iteratively performing 604 the agent selection steps for a predefined number of iterations or until reaching a final node or a goal node in the conversation tree. The start node initialized for the conversation tree may include an agent corresponding to a child node of the start node having the second highest 'f' score in the conversation tree of the previous iteration. Performing 604 the agent selection steps in each iteration may include (i) identifying 606 leaves (e.g., agents such as first agents, second agents, third agents, fourth agents, fifth agents, and/or the like, corresponding to the child nodes or leaf nodes) for the start node or an agent (e.g., an agent 'n') that has been contributed to or participated in a previous message; (ii) computing 608 'f' scores (score values) for the leaves; (iii) selecting 610, among the leaves, an agent 'n' with the highest 'f' score. The agent 'n' may be located at a position 'p' in the conversation tree; and (iv) enabling 612 the selected agent 'n' to generate or write a subsequent or new or next message at the position 'p'.

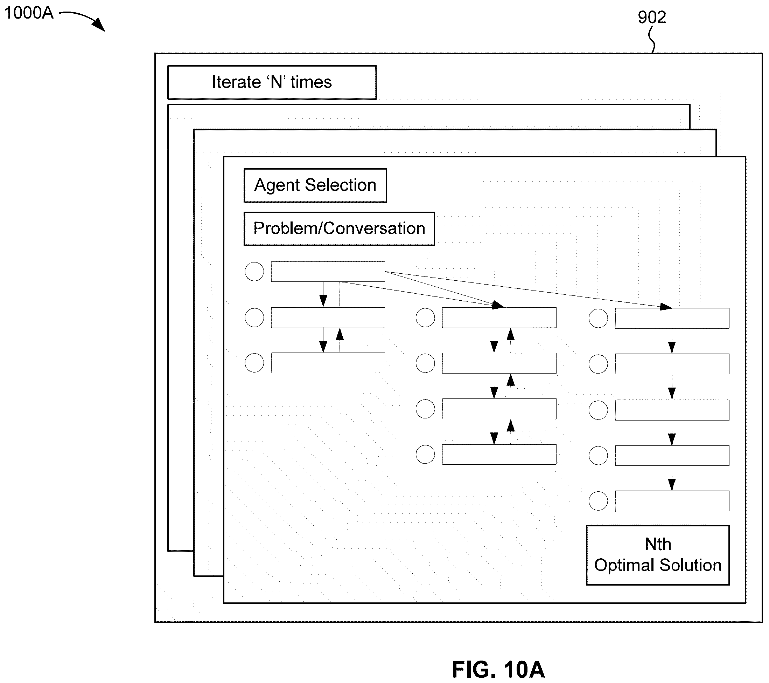

An example illustration 1000A of generating 902 the 'N' number of solutions by iterating the conversation for 'N' number of iterations is depicted in FIG. 10A.

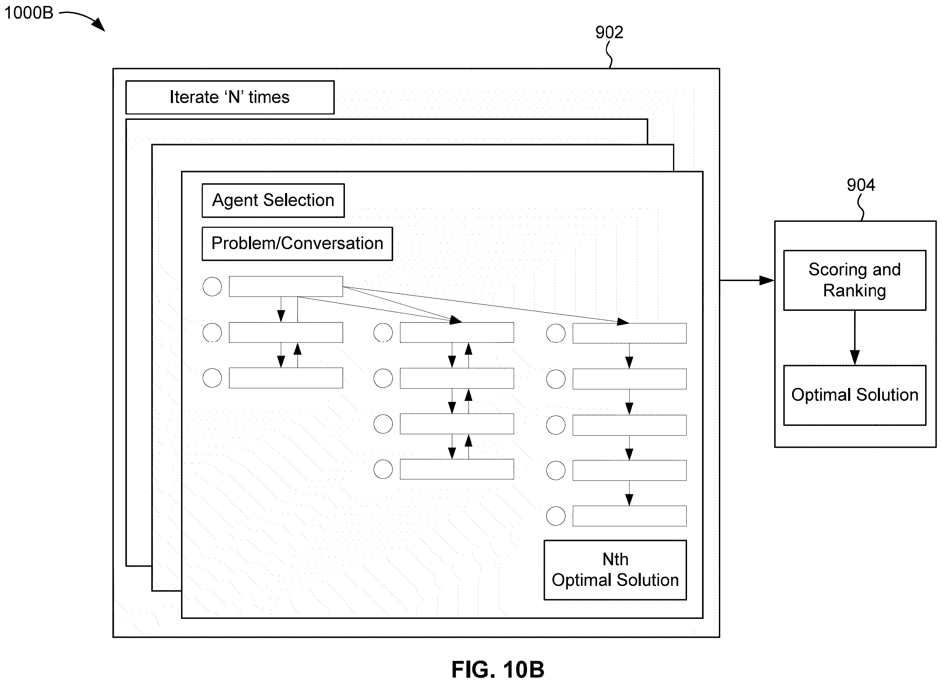

Upon generating the 'N' number of solutions, the multi-agent system 102 selects 904 an optimal solution from the 'N' number of solutions for the problem. The optimal solution may be selected by scoring and ranking each of the 'N' number of solutions based on the score evaluation function 414 or using the LLM from the LLMs 204 from the model database 202 (depicted in FIG. 4). An example illustration 1000B of selecting 904 the optimal solution from the generated 'N' number of solutions is depicted in FIG. 10B.

In some implementations, the multi-agent system 102 may generate the 'N' number of solutions and the 'top K' solutions at a time. An example illustration 1100 of generating both the 'N' number of solutions and the 'top K' solutions is depicted in FIG. 11. As depicted in FIG. 11, the 'top K' solutions may be selected between the 'N' number of solutions.

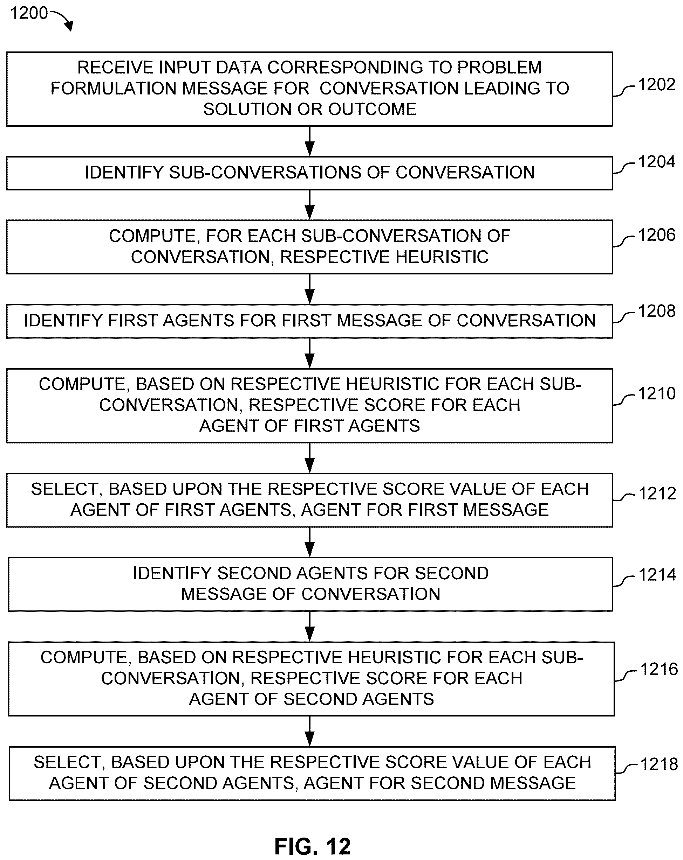

FIG. 12 is a flow diagram that presents an example computer implemented method 1200 for a multi-agent pool speaker selection, in accordance with implementations of the present disclosure. In some implementations, the method 1200 may be executed by the processor 114 (including the one or more processors) of the multi-agent system 102, as described in relation to FIGS 1-11.

The method 1200 includes receiving 1202 an input data corresponding to a problem formulation message for a conversation leading to a solution or outcome of multiple solutions or outcomes. The problem formulation message may describe a problem to be solved. In some examples, a start node or root node may be associated with the problem formulation message based on an initialization message received from the user and/or using an LLM from the LLMs 204 of the model database 202 (depicted in FIG. 2).

Based on the input data, the method 1200 includes identifying 1204 sub-conversations of the conversation corresponding to the solution or outcome. The sub-conversations may correspond to sub-problems of the problem. In some examples, the sub-conversations of the conversation may be identified using an LLM from the LLMs 204 of the model database 202. Identifying the sub-conversations of the conversation is described in detail in conjunction with FIG. 2, therefore repeated description is omitted for sake of brevity.

For each sub-conversation, the method 1200 includes computing 1206 a respective heuristic. Computing the respective heuristic for each sub-conversation may involve determining the respective heuristic to be measured for each sub-conversation. The heuristic may be computed based upon a respective weight, a description, and/or a function (e.g., an evaluation function) associated with a respective sub-conversation. The heuristic may include one or more of: creativity, pertinence, relevance, staleness, a number of facts, a number of statistics, participation, and/or disagreement (debate) assigned to a respective weight.

Further, the method 1200 includes identifying 1208 first agents for a first message of the conversation. The first agents may be identified based on a conversation tree created based on a description and capabilities of each agent in a pool of agents or multi-agent pool 108 (depicted in FIG. 1).

The method includes 1200 includes computing 1210 a respective score value for each agent of the first agents with respect to each sub-conversation, based on the respective heuristic for each sub-conversation. Based upon the respective score value of each agent of the first agents, the method 1200 includes selecting 1212 an agent of the first agents as a first agent for contributing to or participating in the first message of the conversation.

Based at least in part upon the contribution or participation of the first agent to or in the first message of the conversation and the description and capabilities of each agent in the pool of agents or multi-agent pool 108, the method includes 1200 identifying 1214 second agents for a second message of the conversation. Based on the respective heuristic for each sub-conversation, the method 1200 includes computing 1216 a respective score value for each agent of the second agents corresponding with each sub-conversation. Based upon the respective score value of each agent of the second agents, the method includes 1200 selecting 1218 an agent of the second agents as a second agent for contributing to or participating in the second message of the conversation. The agent of the first agents and the agent of the second agents are selected based upon a goal-oriented progression of the conversation leading to the solution or outcome.

In some examples, the respective score value for each of the first agents or the second agents may be computed based on a 'g' score and a 'h' score. The 'g' score for each agent of the first agents or the second agents may be estimated by evaluating a conversation path from the start node corresponding to the problem formulation message to a respective agent using a first prompt. The 'h' score for each agent of the first agents or the second agents may be estimated by evaluating a progress of a next message from the respective agent using a second prompt. Computing the respective score value for each agent and selecting the agent for the next message based on the respective score value of each agent are described in detail in conjunction with FIGS. 4 and 5A-5E, therefore repeated description is omitted herein for sake of brevity. In some examples, the first agents, and the second agents include LLM based agents. In some other examples, the first agents, and the second agents include may include a combination of LLM based agents and a non-LLM based agents. In some examples, the agent selected from the first agents, or the second agents may include an LLM based agent. In some other examples, the agent selected from the first agents, or the second agents may include an LLM based agent or a non-LLM based agent.

In some implementations, the method 1200 may include generating 'top K' numbers of solutions or outcomes by iteratively performing steps 1202-1218. The value 'K' is not more than a user provided threshold value. Further, among the generated 'top K' number of solutions or outcomes, the method 1200 may include selecting a solution or outcome as an optimal or best solution based upon a respective ranking of each of the 'top K' number of solutions or outcomes.

In some other implementations, the method 1200 may include generating 'N' numbers of solutions or outcomes by iteratively performing steps 1202-1218. The value 'N' is not more than a user provided threshold value. Further, among the generated 'N' number of solutions or outcomes, the method 1200 may include selecting a solution or outcome as an optimal or best solution based upon a respective ranking of each of the 'N' number of solutions or outcomes. Generation of the 'top K' number of solutions or outcomes and the 'N' number of solutions or outcomes and selection of an optimal or best solution or outcome from the 'top K' number of solutions or outcomes and the 'N' number of solutions or outcomes are described in detail in conjunction with FIG. 4, therefore repeated description is omitted herein for sake of brevity.

Implementations of the present disclosure provide technical solutions to multiple technical problems that arise in the context of generating a solution for a problem using multiple agents or multiple agentic workflows. Implementations of the present disclosure enable selection of agents from a multi-agent pool for a conversation by measuring past and future performance of the agents based on a heuristic list created for each sub-problem of the problem corresponding to sub-conversation of the conversation and goal-oriented progression of the conversation. Such a selection may provide a more direct and precise measure of what agents to be selected for the conversation, which may result in an optimal solution for the problem. Therefore, problem solving performance of the agents may be improved beyond prompt-engineering methods, which may further increase performance of the multiple agentic workflows and enable the multiple agentic workflows to operate as being more goal-oriented.

Implementation of the present disclosure provide agent selection flexibility during the conversation itself and moreover automatically allow an optimal backtracking and exploration of alternative agent choice from any point in the conversation. Further, implementations of the present disclosure may ensure devising an effective branch selection technique (i.e., selection of the agents based on the heuristic list) to select the optimal branch that maximizes the conversation goal metric in a preferably depth first search manner.

Therefore, implementations of the present disclosure generate the optimal solution for the problem. The optimal solution generated for the problem may provide consistent outputs or responses that align with expected outcomes, reducing unexpected interactions with users. Implementations of the present disclosure also provide efficiencies in terms of technical resource consumption, which also includes minimizing latency (even under heavy loads). For example, implementations of the present disclosure optimize use of technical resources (processors, memory, bandwidth) with respect to the problems to solve or tasks to achieve, for example, cost reduction (e.g., in terms of technical resources expended) and/or improvements in user experience (e.g., reduced latency).

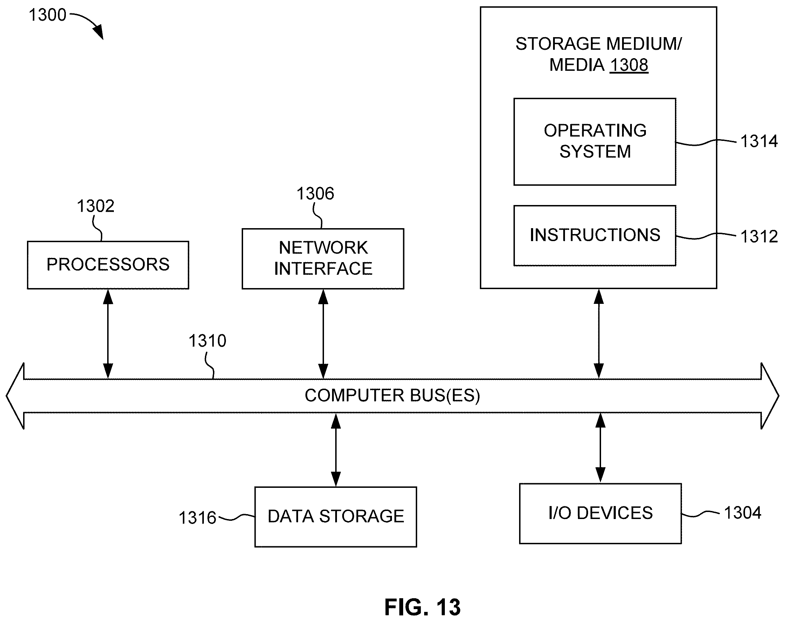

FIG. 13 depicts a computer system 1300 that may be used to implement the multi-agent system 102 disclosed in the example environment of FIG. 1. More particularly, computing machines such as desktops, laptops, smartphones, tablets, and wearables which may be used for multi-agent pool speaker selection. The computer system 1300 may include additional components not shown and that some of the process components described may be removed and/or modified. In another example, a computer system 1300 may be deployed on external-cloud platforms such as cloud, internal corporate cloud computing clusters, organizational computing resources, and/or the like.

The computer system 1300 includes processor(s) 1302 such as, a central processing unit, ASIC or another type of processing circuit, input/output devices (I/O devices) 1304 such as, a display, mouse keyboard, etc., a network interface 1306 such as, a Local Area Network (LAN), a wireless 802.11x LAN, a 3G or 4G mobile WAN or a WiMax WAN, and a storage media or medium 1308 (also be referenced as computer-readable medium 1308 (CRM)). Each of these components may be operatively coupled to a bus 1310. The computer-readable medium 1308 may be any suitable medium that participates in providing instructions to the processor(s) 1302 for execution. For example, the computer-readable medium 1308 may be non-transitory or non-volatile medium such as, a magnetic disk or solid-state non-volatile memory or volatile medium such as RAM. The instructions or modules stored on the computer-readable medium 1308 may include machine-readable instructions 1312 executed by the processor(s) 1302 that cause the processor(s) 1302 to perform the methods and functions of the multi-agent system 102.

The multi-agent system 102 may be implemented as software stored on a non-transitory processor-readable medium and executed by the processor(s) 1302. For example, the computer-readable medium 1308 may store an operating system 1314 such as, MAC OS, MS WINDOWS, UNIX, or LINUX, and code, for the multi-agent system 102. The operating system 1314 may be multi-user, multiprocessing, multitasking, multithreading, real-time, and the like. For example, during runtime, the operating system 1314 is running and the code for the multi-agent system 102 is executed by the processor(s) 1302.

The computer system 1300 may include a data storage 1316, which may include non-volatile data storage. The data storage 1316 stores any data used or generated by the multi-agent system 102.

The network interface 1306 connects the computer system 1300 to internal systems for example, via a LAN. Also, the network interface 1306 may connect the computer system 1300 to the Internet. For example, the computer system 1300 may connect to web browsers and other external applications and systems via the network interface 1306.

What has been described and illustrated herein is an example along with some of its variations. The terms, descriptions, and figures used herein are set forth by way of illustration only and are not meant as limitations. Many variations are possible within the spirit and scope of the subject matter, which is intended to be defined by the following claims and their equivalents.

Implementations and all of the functional operations described in this specification may be realized in digital electronic circuitry, or in computer software, firmware, or hardware, including the structures disclosed in this specification and their structural equivalents, or in combinations of one or more of them. Implementations may be realized as one or more computer program products (i.e., one or more modules of computer program instructions encoded on a computer readable medium for execution by, or to control the operation of, data processing apparatus). The computer readable medium may be a machine-readable storage device, a machine-readable storage substrate, a memory device, a composition of matter effecting a machine-readable propagated signal, or a combination of one or more of them. The term "computing system" encompasses all apparatus, devices, and machines for processing data, including by way of example a programmable processor, a computer, or multiple processors or computers. The apparatus may include, in addition to hardware, code that creates an execution environment for the computer program in question (e.g., code that constitutes processor firmware, a protocol stack, a database management system, an operating system, or any appropriate combination of one or more thereof). A propagated signal is an artificially generated signal (e.g., a machine-generated electrical, optical, or electromagnetic signal) that is generated to encode information for transmission to suitable receiver apparatus.

A computer program (also known as a program, software, software application, script, or code) may be written in any appropriate form of programming language, including compiled or interpreted languages, and it may be deployed in any appropriate form, including as a stand-alone program or as a module, component, subroutine, or other unit suitable for use in a computing environment. A computer program does not necessarily correspond to a file in a file system. A program may be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program may be deployed to be executed on one computer or on multiple computers that are located at one site or distributed across multiple sites and interconnected by a communication network.

The processes and logic flows described in this specification may be performed by one or more programmable processors executing one or more computer programs to perform functions by operating on input data and generating output. The processes and logic flows may also be performed by, and apparatus may also be implemented as, special purpose logic circuitry (e.g., an FPGA (field programmable gate array) or an ASIC (application specific integrated circuit)).

Processors suitable for the execution of a computer program include, by way of example, both general and special purpose microprocessors, and any one or more processors of any appropriate kind of digital computer. Generally, a processor will receive instructions and data from a read only memory or a random-access memory or both. Elements of a computer may include a processor for performing instructions and one or more memory devices for storing instructions and data. Generally, a computer also includes or is operatively coupled to receive data from or transfer data to, or both, one or more mass storage devices for storing data (e.g., magnetic, magneto optical disks, or optical disks). However, a computer need not have such devices. Moreover, a computer may be embedded in another device (e.g., a mobile telephone, a personal digital assistant (PDA), a mobile audio player, a Global Positioning System (GPS) receiver). Computer readable media suitable for storing computer program instructions and data include all forms of non-volatile memory, media and memory devices, including by way of example semiconductor memory devices (e.g., EPROM, EEPROM, and flash memory devices); magnetic disks (e.g., internal hard disks or removable disks); magneto optical disks; and CD ROM and DVD-ROM disks. The processor(s) 1302 and the memory may be supplemented by, or incorporated in, special purpose logic circuitry.

To provide for interaction with a user, implementations may be realized on a computer having a display device (e.g., a CRT (cathode ray tube), LCD (liquid crystal display) monitor) for displaying information to the user and a keyboard and a pointing device (e.g., a mouse, a trackball, a touch-pad), by which the user may provide input to the computer. Other kinds of devices may be used to provide for interaction with a user as well; for example, feedback provided to the user may be any appropriate form of sensory feedback (e.g., visual feedback, auditory feedback, tactile feedback); and input from the user may be received in any appropriate form, including acoustic, speech, or tactile input.

Implementations may be realized in a computing system that includes a back end component (e.g., as a data server), a middleware component (e.g., an application server), and/or a front end component (e.g., a client computer having a graphical user interface or a Web browser, through which a user may interact with an implementation), or any appropriate combination of one or more such back end, middleware, or front end components. The components of the system may be interconnected by any appropriate form or medium of digital data communication (e.g., a communication network). Examples of communication networks include a local area network ("LAN") and a wide area network ("WAN"), e.g., the Internet.

The computing system may include clients and servers. A client and server are generally remote from each other and interact through a communication network. The relationship of client and server arises by virtue of computer programs running on the respective computers and having a client-server relationship to each other.

While this specification contains many specifics, these should not be construed as limitations on the scope of the disclosure or of what may be claimed, but rather as descriptions of features specific to particular implementations. Certain features that are described in this specification in the context of separate implementations may also be implemented in combination in a single implementation. Conversely, various features that are described in the context of a single implementation may also be implemented in multiple implementations separately or in any suitable sub-combination. Moreover, although features may be described above as acting in certain combinations and even initially claimed as such, one or more features from a claimed combination may in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems may generally be integrated together in a single software product or packaged into multiple software products.

A number of implementations have been described. Nevertheless, it will be understood that various modifications may be made without departing from the spirit and scope of the disclosure. For example, various forms of the flows shown above may be used, with steps reordered, added, or removed. Accordingly, other implementations are within the scope of the following claims.

## Claims

1. A computer-implemented method for a multi-agent pool speaker selection, the computer-implemented method comprising:
receiving an input data corresponding to a problem formulation message for a conversation leading to a solution or outcome of a plurality of solutions or outcomes;
identifying, based on the input data, a plurality of sub-conversations of the conversation corresponding to the solution or outcome of the plurality of solutions or outcomes;
computing, for each sub-conversation of the plurality of sub-conversations corresponding to the conversation leading to the solution or outcome of the plurality of solutions or outcomes, a respective heuristic of a plurality of heuristics;
identifying, based on a description and capabilities of each agent in a pool of agents, a first plurality of agents for a first message of the conversation, the first message is in response to the problem formulation message;
computing, based on the respective heuristic for each sub-conversation of the plurality of sub-conversations, a respective score value for each agent of the first plurality of agents corresponding with each sub-conversation of the plurality of sub-conversations;
selecting, based upon the respective score value of each agent of the first plurality of agents, an agent of the first plurality of agents as a first agent for contributing to or participating in the first message of the conversation;
identifying, based at least in part upon the contribution or participation of the first agent to or in the first message of the conversation and the description and capabilities of each agent in the pool of agents, a second plurality of agents for a second message of the conversation;
computing, based on the respective heuristic for each sub-conversation of the plurality of sub-conversations, a respective score value for each agent of the second plurality of agents corresponding with each sub-conversation of the plurality of sub-conversations; and
selecting, based upon the respective score value of each agent of the second plurality of agents, an agent of the second plurality of agents as a second agent for contributing to or participating in the second message of the conversation,
wherein the agent of the first plurality of agents and the agent of the second plurality of agents are selected based upon a goal-oriented progression of the conversation leading to the solution or outcome of the plurality of solutions or outcomes.

2. The computer-implemented method of claim 1, wherein the respective heuristic of a plurality of heuristics is computed based upon a respective weight, a description, and/or a function associated with a sub-conversation of the plurality of sub-conversations.

3. The computer-implemented method of claim 1 or 2, wherein the plurality of heuristics is based upon one or more of creativity, pertinence, relevance, staleness, a number of facts, a number of statistics, participation, and/or disagreement assigned to a respective weight.

4. The computer-implemented method of any one of the preceding claims, wherein identifying the plurality of sub-conversations of the conversation comprises identifying the plurality of sub-conversations using a large language model (LLM).

5. The computer-implemented method of any one of the preceding claims, wherein the first plurality of agents, or the second plurality of agents includes a LLM based agent;
and/or
wherein the agent of the first plurality of agents or the agent of the second plurality of agents selected for contributing to or participating in the conversation is a LLM based agent.

6. The computer-implemented method of any one of the preceding claims, further comprising generating a first prompt to evaluate a conversation path from the problem formulation message to each agent of the first plurality of agents or a conversation path from the problem formulation message to each agent of the second plurality of agents based on the heuristic of each sub-conversation of the plurality of sub-conversations, and generating a second prompt to evaluate a progress of a next message from each agent of the first plurality of agents or from each agent of the second plurality of agents based on the heuristic of each sub-conversation of the plurality of sub-conversations, for computing the respective score value for each agent of the first plurality of agents or for each agent of the second plurality of agents, respectively.

7. The computer-implemented method of any one of the preceding claims, further comprising repeating all operations of claim 1 for generating 'top K' numbers of solutions or outcomes of the plurality of solutions or outcomes, wherein a value 'K' is not more than a user provided threshold value, and wherein the solution or outcome of the plurality of solutions or outcomes is a best solution of outcome among the 'top K' numbers of solutions or outcomes of the plurality of solutions or outcomes based upon a respective ranking of each of the 'top K' numbers of solutions or outcomes.

8. The computer-implemented method of any one of the preceding claims, further comprising repeating all operations of claim 1 for generating 'N' numbers of solutions or outcomes of the plurality of solutions or outcomes, wherein a value 'N' is not more than a user provided threshold value, and wherein the solution or outcome of the plurality of solutions or outcomes is a best solution of outcome among the 'N' numbers of solutions or outcomes of the plurality of solutions or outcomes based upon a respective ranking of each of the 'N' numbers of solutions or outcomes.

9. A system for a multi-agent pool speaker selection, the system comprising:
at least one memory configured to store machine executable instructions; and
at least one processor communicatively coupled with the at least one memory, and configured to execute the machine executable instructions to perform operations comprising:
receiving an input data corresponding to a problem formulation message for a conversation leading to a solution or outcome of a plurality of solutions or outcomes;
identifying, based on the input data, a plurality of sub-conversations of the conversation corresponding to the solution or outcome of the plurality of solutions or outcomes;
computing, for each sub-conversation of the plurality of sub-conversations corresponding to the conversation leading to the solution or outcome of the plurality of solutions or outcomes, a respective heuristic of a plurality of heuristics;
identifying, based on a description and capabilities of each agent in a pool of agents, a plurality of first agents for a first message of the conversation, the first message is in response to the problem formulation message;
computing, based on the respective heuristic for each sub-conversation of the plurality of sub-conversations, a respective score value for each agent of the first plurality of agents corresponding with each sub-conversation of the plurality of sub-conversations;
selecting, based upon the respective score value of each agent of the first plurality of agents, an agent of the first plurality of agents as a first agent for contributing to or participating in the first message of the conversation;
identifying, based at least in part upon the contribution or participation of the first agent to or in the first message of the conversation and the description and capabilities of each agent in the pool of agents, a second plurality of agents for a second message of the conversation;
computing, based on the respective heuristic for each sub-conversation of the plurality of sub-conversations, a respective score value for each agent of the second plurality of agents corresponding with each sub-conversation of the plurality of sub-conversations; and
selecting, based upon the respective score value of each agent of the second plurality of agents, an agent of the second plurality of agents as a second agent for contributing to or participating in the second message of the conversation,
wherein the agent of the first plurality of agents and the agent of the second plurality of agents are selected based upon a goal-oriented progression of the conversation leading to the solution or outcome of the plurality of solutions or outcomes.

10. The system of claim 9, wherein the respective heuristic of a plurality of heuristics is computed based upon a respective weight, a description, and/or a function associated with a sub-conversation of the plurality of sub-conversations;
and/or
wherein the plurality of heuristics is based upon one or more of creativity, pertinence, relevance, staleness, a number of facts, a number of statistics, participation, and/or disagreement assigned to a respective weight.

11. The system of claim 9 or 10, wherein identifying the plurality of sub-conversations of the conversation comprises identifying the plurality of sub-conversations using a large language model (LLM);
and/or
wherein the first plurality of agents, or the second plurality of agents includes a LLM based agent.

12. The system of any one of claims 9 to 11, wherein the agent of the first plurality of agents or the agent of the second plurality of agents selected for contributing to or participating in the conversation is a LLM based agent;
and/or
wherein the operations further comprise generating a first prompt to evaluate a conversation path from the problem formulation message to each agent of the first plurality of agents or a conversation path from the problem formulation message to each agent of the second plurality of agents based on the heuristic of each sub-conversation of the plurality of sub-conversations, and generating a second prompt to evaluate a progress of a next message from each agent of the first plurality of agents or from each agent of the second plurality of agents based on the heuristic of each sub-conversation of the plurality of sub-conversations, for computing the respective score value for each agent of the first plurality of agents or for each agent of the second plurality of agents, respectively.

13. A non-transitory computer readable media (CRM) storing instructions thereon, which, when executed by at least one processor of a computing device, cause the computing device configured for a multi-agent pool speaker selection by performing operations comprising:
receiving an input data corresponding to a problem formulation message for a conversation leading to a solution or outcome of a plurality of solutions or outcomes;
identifying, based on the input data, a plurality of sub-conversations of the conversation corresponding to the solution or outcome of the plurality of solutions or outcomes;
computing, for each sub-conversation of the plurality of sub-conversations corresponding to the conversation leading to the solution or outcome of the plurality of solutions or outcomes, a respective heuristic of a plurality of heuristics;
identifying, based on a description and capabilities of each agent in a pool of agents, a first plurality of agents for a first message of the conversation, the first message is in response to the problem formulation message;
computing, based on the respective heuristic for each sub-conversation of the plurality of sub-conversations, a respective score value for each agent of the first plurality of agents corresponding with each sub-conversation of the plurality of sub-conversations;
selecting, based upon the respective score value of each agent of the first plurality of agents, an agent of the first plurality of agents as a first agent for contributing to or participating in the first message of the conversation;
identifying, based at least in part upon the contribution or participation of the first agent to or in the first message of the conversation and the description and capabilities of each agent in the pool of agents, a second plurality of agents for a second message of the conversation;
computing, based on the respective heuristic for each sub-conversation of the plurality of sub-conversations, a respective score value for each agent of the second plurality of agents corresponding with each sub-conversation of the plurality of sub-conversations; and
selecting, based upon the respective score value of each agent of the second plurality of agents, an agent of the second plurality of agents as a second agent for contributing to or participating in the second message of the conversation,
wherein the agent of the first plurality of agents and the agent of the second plurality of agents are selected based upon a goal-oriented progression of the conversation leading to the solution or outcome of the plurality of solutions or outcomes.

14. The non-transitory CRM of claim 13, wherein the respective heuristic of a plurality of heuristics is computed based upon a respective weight, a description, and/or a function associated with a sub-conversation of the plurality of sub-conversations;
and/or
wherein the plurality of heuristics is based upon one or more of creativity, pertinence, relevance, staleness, a number of facts, a number of statistics, participation, and/or disagreement assigned to a respective weight.

15. The non-transitory CRM of claim 13 or 14, wherein the operations further comprise generating a first prompt to evaluate a conversation path from the problem formulation message to each agent of the first plurality of agents or a conversation path from the problem formulation message to each agent of the second plurality of agents based on the heuristic of each sub-conversation of the plurality of sub-conversations, and generating a second prompt to evaluate a progress of a next message from each agent of the first plurality of agents or from each agent of the second plurality of agents based on the heuristic of each sub-conversation of the plurality of sub-conversations, for computing the respective score value for each agent of the first plurality of agents or for each agent of the second plurality of agents, respectively,
wherein identifying the plurality of sub-conversations of the conversation comprises identifying the plurality of sub-conversations using a large language model (LLM), and
wherein the first plurality of agents or the second plurality of agents includes a LLM based agent.
